# EUROPEAN PATENT SPECIFICATION

(11) **EP 4 560 425 B1**
(45) Date of publication and mention of the grant of the patent: **23.09.2026**
(21) Application number: 24208526.4
(22) Date of filing: 24.10.2024
(51) Int. Cl.: G05D 1/24, G05D 1/248, G05D 1/247, G01S 19/00, G01S 19/07, G01S 19/14, G01S 19/22, G01S 19/35

(54) **SELF-PROPELLED DEVICE**
SELBSTFAHRENDE VORRICHTUNG
DISPOSITIF AUTOMOTEUR

(30) Priority: 21.11.2023 CN 202311564654; 21.11.2023 CN 202311563346; 22.11.2023 CN 202323168749 U; 22.11.2023 CN 202323161804 U
(43) Date of publication of application: 28.05.2025
(73) Proprietor: Nanjing Chervon Industry Co., Ltd., Nanjing, Jiangsu 211106 (CN)
(72) Inventor: ZHAO, Dan, Nanjing (CN); SHI, Lingjian, Nanjing (CN); ZHANG, Peng, Nanjing (CN); LI, Feng, Nanjing (CN); YAO, Surui, Nanjing (CN)
(74) Representative: Sun, Yiming

(56) References cited:
- WO-A1-2022/094898
- WO-A1-2022/242717
- CN-A- 108 226 964
- CN-A- 114 047 756
- CN-A- 114 646 992
- CN-A- 117 045 150
- US-A1- 2011 142 099
- US-A1- 2019 369 620

## Description

This invention claims priority to Chinese Patent Applications No. 202311564654.2 and No. 202311563346.8 filed with the China National Intellectual Property Administration (CNIPA) on Nov. 21, 2023 and Chinese Patent Applications No. 202323168749.0 and No. 202323161804.3 filed with the CNIPA on Nov. 22, 2023.

### TECHNICAL FIELD

The present invention relates to the technical field of power tools and, in particular, to a self-propelled device.

### BACKGROUND

When positioning and navigating control of a self-propelled device are achieved, a differential positioning system may be used to improve the relevant accuracy. The differential positioning system includes a base station fixed at a certain installation position, the self-propelled device communicatively connected to the base station, and a satellite system communicatively connected to both the base station and the self-propelled device. By comparing the installation position of the base station with the position of the base station obtained through the observation of the satellite positioning system, the base station can obtain differential data for correcting the positioning error of the satellite system, and the base station sends the differential data to the self-propelled device so that the self-propelled device can calculate the actual position of the self-propelled device, and the positioning and navigation control can be performed.

However, there may be large objects around the base station and the self-propelled device, such as buildings and tall trees. The presence of large objects blocks the normal communication between the satellite system, the base station, and the self-propelled device, adversely affecting the positioning and navigation control process of the self-propelled device.

US2019369620A1 discloses a returning method of a self-moving device. A self-moving device are provided. In the returning method, a self-moving device autonomously moves inside a working region based on a map. Specifically, the method includes: acquiring a current position of the self-moving device in the working region; selecting a return path to a target position according to the current position; determining a reuse status of the return path, determining, based on the reuse status of the return path, whether to reselect a return path; and enabling the self-moving device to return to the target position along the selected return path.

US2011142099A1 discloses a device for controlling self-propelled mobile apparatus(es), including: a stationary base station, provided with a receiver for a satellite location system, referred to as a stationary GNSS receiver, and a radiofrequency transmitter/receiver to enable communication with at least one mobile apparatus, and including: a positioning module, a command module, and a control module for controlling the movement of each mobile apparatus on the ground; at least one mobile apparatus, including a moving element, a mobile GNSS receiver, and a radiofrequency transmitter/receiver for transmitting, to the base station, information received by the mobile GNSS receiver and receiving a movement command.

CN114646992A relates to a positioning method and device, computer equipment, a storage medium and a computer program product.

CN114047756A discloses a coordinate adjusting method of self-walking equipment.

CN108226964A relates to a positioning fault alarm method of self-moving equipment. The self-moving equipment is configured to independently move within a work area defined by a map according to positioning to the self-moving equipment. The method comprises the following steps: receiving positioning data from a satellite positioning system, so as to position the self-moving equipment; detecting whether the self-moving equipment has a positioning fault; giving an alarm for the positioning fault by responding the fact that the self-moving equipment has a positioning fault is detected.

WO2022242717A1 provides a map selection method, a self-moving device, an electronic terminal, and a computer readable storage medium. The map selection method comprises: sending a map information acquisition request to a cloud server (S901), the map information acquisition request carrying the current location information of the self-moving device; receiving target map information of a target service area (S902), wherein the target map information is obtained by the cloud server according to the location information, and map information comprises boundary information of a service area; and controlling, according to the target map information, the self-moving device to execute a service operation in the target service area (S903). The self-moving device does not need manual connection establishment and settings of the self-moving device, so that the matching efficiency is improved, and manpower and material resources are saved, thereby improving user experience.

CN117045150A discloses a map switching method and device and self-moving cleaning equipment, and the method comprises the steps: determining a first position where the self-moving cleaning equipment is currently located; under the condition that the first position where the self-moving cleaning equipment is located is matched with the second position where the target equipment is located, a target map switching code attached to the target equipment is scanned, the target map switching code carries a target map identifier, and the target map identifier is used for indicating an area corresponding to the current position where the self-moving cleaning equipment is located; and switching the cleaning map currently used by the self-moving cleaning equipment to the target cleaning map corresponding to the target map identifier, and by adopting the technical scheme, the technical problem of low switching efficiency of a map switching method provided in related technologies is solved.

US2019/339080A1 discloses a path planning method and device including obtaining, based on a pass-through distance of each of a plurality of first areas and signal quality of a wireless signal in each first area, a pass-through cost for passing through each first area; obtaining a start location and a target location, and performing path planning based on the pass-through cost for passing through each first area, to determine a pass-through path from the start location to the target location, where the pass-through path includes an area passed through from the start location to the target location.

WO2022094898A1 discloses an unmanned aerial vehicle positioning method and positioning apparatus, an unmanned aerial vehicle comprising the positioning apparatus and a mobile platform.

This part provides background information related to the present invention, and the background information is not necessarily the existing art.

### SUMMARY

An object of the present invention is to solve or at least alleviate part or all of the preceding problems. Therefore, the object of the present invention is to provide a self-propelled device.
To achieve the preceding object, the present invention is set out in the appended set of claims.

### BRIEF DESCRIPTION OF DRAWINGS

FIG. 1 is an architecture diagram of a work system of a self-propelled device in an example of the present invention.
FIG. 2 is a perspective view of a self-propelled device in an example of the present invention.
FIG. 3 is a schematic diagram of electric control of a self-propelled device in an example of the present invention.
FIG. 4 is a schematic diagram of satellite elevation angles and satellite azimuths in an example of the present invention.
FIG. 5 is a flowchart of a blocking detection method for a self-propelled device in an example of the present invention.
FIG. 6 is a schematic diagram of electric control of a self-propelled device in another example of the present invention.
FIG. 7 is a schematic diagram of electric control of a work system of a self-propelled device in another example of the present invention.
FIG. 8 is a perspective view of a base in an example of the present invention.
FIG. 9 is a perspective view of a charging pile in an example of the present invention.
FIG. 10 is a side view of the charging pile shown in FIG. 9.
FIG. 11 is a schematic diagram of electric control of a charging pile in an example of the present invention.
FIG. 12 is a schematic diagram of electric control of another charging pile in an example of the present invention.
FIG. 13 is a schematic diagram of electric control of a base station in an example of the present invention.
FIG. 14 is a perspective view of a base station in an example of the present invention.
FIG. 15 is a perspective view of a base station at a first height position in an example of the present invention.
FIG. 16 is a side view of the base station shown in FIG. 15.
FIG. 17 is a perspective view of a base station at a second height position in an example of the present invention.
FIG. 18 is a side view of the base station shown in FIG. 17.
FIG. 19 is a perspective view of a base station at a third height position in an example of the present invention.
FIG. 20 is a side view of the base station shown in FIG. 19.
FIG. 21 is a schematic diagram of electric control of another base station in an example of the present invention.

### DETAILED DESCRIPTION

Technical solutions proposed in the present invention are further described in detail below in conjunction with drawings and examples. Embodiments in paragraphs 76 to 126 are not encompassed by the wording of the claims but are considered as useful for understanding the invention.

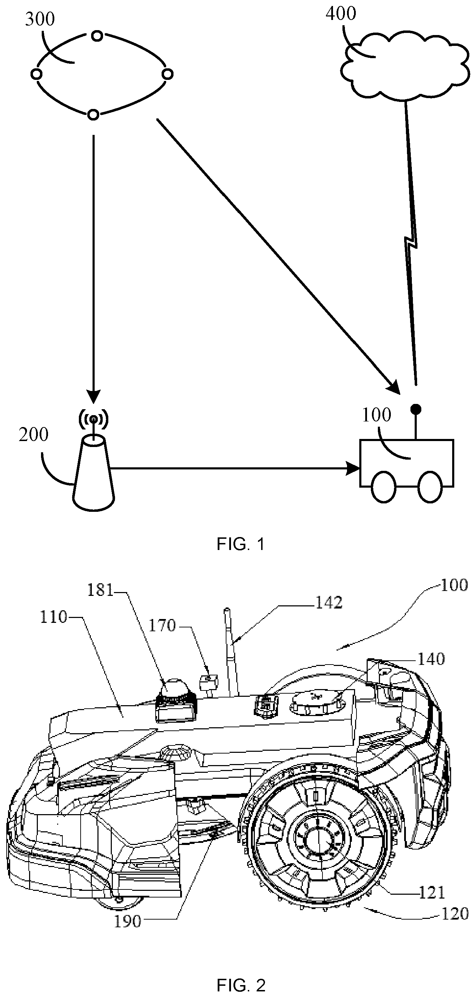

To reduce the adverse effects of external objects blocking the positioning and navigation control of the self-propelled device, referring to FIG. 1, the present invention provides a self-propelled device 100, the self-propelled device 100, a base station 200, and a satellite system 300 form a differential positioning system, and communication connections may be established between the self-propelled device 100, the base station 200, and the satellite system 300 so that data can be exchanged. Further, the self-propelled device 100 may access the Internet 400. The self-propelled device 100 and the base station 200 are generally disposed at the work site of the self-propelled device 100.

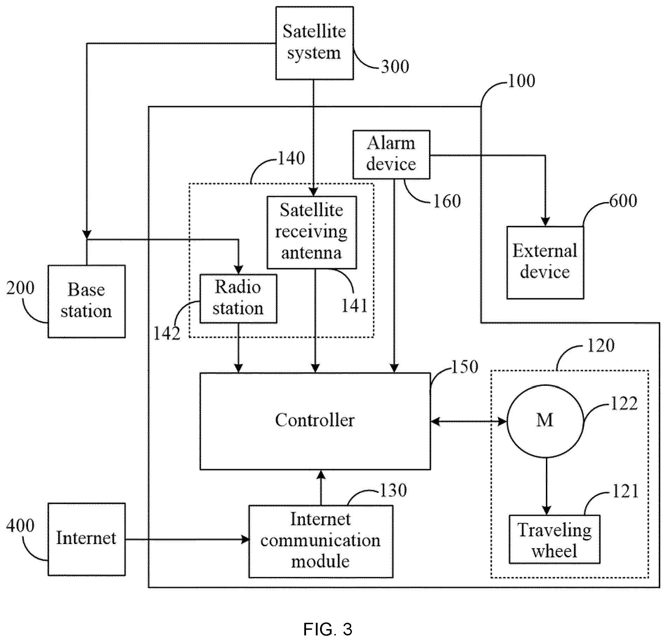

Specifically, as shown in FIGS. 2 and 3, the self-propelled device 100 includes a housing 110 and a traveling assembly 120. The housing 110 is a support member/accommodation member. The traveling assembly 120 is coupled to the housing 110. The traveling assembly 120 includes traveling wheels 121 and a traveling electric motor 122. The traveling electric motor 122 may drive the traveling wheel 121 to rotate so that the self-propelled device 100 can travel at the work site. Specifically, the traveling electric motor 122 may be a wheel hub motor. The self-propelled device 100 generally further includes a working assembly 190 formed by a working piece and a working motor.

The self-propelled device 100 further includes an Internet communication module 130, a mobile station 140, and a controller 150. The Internet communication module 130 is connected to the Internet 400 and is configured to download the first ephemeris data from the Internet 400. The mobile station 140 includes a satellite receiving antenna 141 and a radio station 142. The satellite receiving antenna 141 establishes a communication connection with the satellite system 300 and is configured to acquire the satellite signal from the satellite system 300. The satellite signal may include at least satellite observation data of the mobile station 140. The radio station 142 establishes a communication connection with the base station 200 and is configured to acquire the radio signal from the base station 200. The radio signal may include at least satellite observation data of the base station 200 or may further include differential data of the base station 200. The controller 150 may be a microcontroller unit (MCU), an Advanced reduced instruction set computer (RISC) Machine (ARM), a digital signal processor (DSP), or the like and is configured to detect the blocking condition of the mobile station 140 according to the satellite observation data of the mobile station 140 received by the satellite receiving antenna 141 and the first ephemeris data downloaded by the Internet communication module 130.

It is to be noted that the self-propelled device 100 shown in FIG. 2 is a smart mower. It is to be understood that the type of the self-propelled device 100 in the present invention is not limited to the smart mower, and the self-propelled device 100 may further include an automatic snow thrower, an automatic cleaning device, an automatic irrigation device, or the like.

The satellite receiving antenna 141 of the mobile station 140 in the self-propelled device 100 is used for establishing a communication connection with the satellite system 300 to interact with the satellite system 300 to acquire the satellite observation data of the mobile station 140, that is, to acquire the satellite observation data of the self-propelled device 100. The radio station 142 of the mobile station 140 in the self-propelled device 100 is used for establishing a communication connection with the base station 200 to interact with the base station 200 to acquire the satellite observation data of the base station 200. The Internet communication module 130 in the self-propelled device 100 is used for establishing a communication connection with the Internet 400 to download the first ephemeris data from the Internet 400.

Through the satellite receiving antenna 141, the self-propelled device 100 is communicatively connected to several satellites that actually participate in positioning the self-propelled device 100 and are in the satellite system 300. These satellites are currently observable satellites of the self-propelled device 100. The first ephemeris data downloaded by the self-propelled device 100 through the Internet communication module 130 includes satellite information of all the satellites in the satellite system 300, and the satellite information may include at least the satellite numbers and satellite coordinates of the satellites in the satellite system 300.

The satellite receiving antenna 141 in the mobile station 140 receives the satellite signal sent by the satellite system 300. The satellite signal includes the satellite observation data corresponding to the mobile station 140, which is recorded as the first satellite observation data. The first satellite observation data can reflect the satellite information of the observable satellites that actually participate in positioning the mobile station 140 and are in the satellite system 300. The radio station 142 in the mobile station 140 receives the radio signal sent by the base station 200. The radio signal includes the satellite observation data corresponding to the base station 200, which is recorded as the second satellite observation data. The second satellite observation data can reflect the satellite information of the observable satellites that actually participate in positioning the base station 200 and are in the satellite system 300.

The controller 150 of the self-propelled device 100 may detect and determine the blocking condition of the self-propelled device 100 according to the first ephemeris data including all satellite information of the satellite system 300 and the first satellite observation data that can reflect the satellite information actually used for positioning the mobile station 140. In this manner, the movement route of the self-propelled device 100 can be re-planned based on the blocking condition of the self-propelled device 100, thereby preventing the obstruction from adversely affecting the navigation control process of the self-propelled device 100. Further, the controller 150 may detect and determine the blocking condition of the base station 200 according to the first ephemeris data including all satellite information of the satellite system 300 and the second satellite observation data that can reflect the satellite information actually used for positioning the base station 200.

In an example, the controller 150 in the self-propelled device 100 is configured to obtain the second ephemeris data of the mobile station 140 according to the satellite observation data of the mobile station 140, that is, the first satellite observation data, compare the satellites in the first ephemeris data with the satellites in the second ephemeris data, and determine the blocking condition of the mobile station 140 according to the satellites that exist in the first ephemeris data but do not exist in the second ephemeris data.

It is to be noted that the controller 150 of the self-propelled device 100 may obtain the second ephemeris data corresponding to the mobile station 140 according to the satellite observation data of the mobile station 140, that is, the first satellite observation data, where the second ephemeris data includes the satellite numbers and satellite coordinates of the observable satellites of the self-propelled device 100, where the observable satellites actually participate in positioning the mobile station 140 and are in the satellite system 300. If no obstruction exists around the self-propelled device 100, all the satellites in the satellite system 300 can establish communication connections with the mobile station 140 so that the satellites included in the second ephemeris data are consistent with the satellites included in the first ephemeris data. If an obstruction exists around the self-propelled device 100, the obstruction blocks the communication between some satellites in the satellite system 300 and the mobile station 140, the number of satellites in the second ephemeris data is less than the number of satellites in the first ephemeris data, and the satellites that do not exist in the second ephemeris data but exist in the first ephemeris data are the satellites that were originally capable of communicating with the mobile station 140 and are blocked by the obstruction.

During implementation, after the first ephemeris data and the second ephemeris data are acquired, the satellites in the first ephemeris data are compared with the satellites in the second ephemeris data. For example, the satellite numbers in the first ephemeris data are compared with the satellite numbers in the second ephemeris data so that the satellites that exist in the first ephemeris data but do not exist in the second ephemeris data are acquired and recorded as blocked satellites. Then, the blocking condition around the self-propelled device 100 is determined based on the number of blocked satellites and the positions of the blocked satellites relative to the self-propelled device 100 so that the movement route of the self-propelled device 100 can be re-planned based on the blocking condition of the self-propelled device 100, thereby preventing the obstruction from adversely affecting the positioning and navigation control process of the self-propelled device 100.

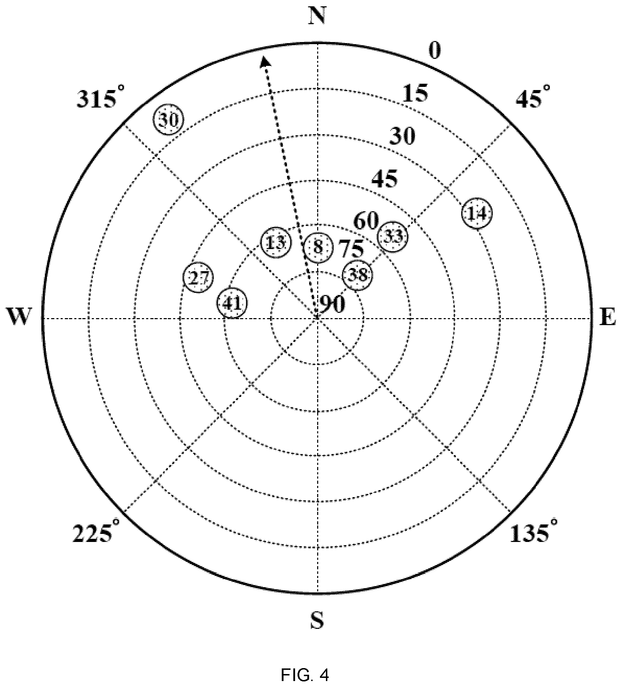

In an example, the controller 150 is configured to calculate the coordinates of the mobile station 140 according to at least the satellite observation data of the mobile station 140 and convert the coordinates of the satellites in the first ephemeris data and the coordinates of the mobile station 140 into the navigation coordinate system of the self-propelled device 100. The coordinates of the satellites in the first ephemeris data are generally in the inertial coordinate system, the calculated coordinates of the mobile station 140 are generally in the Earth-centered, Earth-fixed coordinate system, and the coordinates of the satellites in the first ephemeris data and the coordinates of the mobile station 140 can both be converted into the navigation coordinate system of the self-propelled device 100, thereby facilitating the subsequent screening and determination of the blocked satellites. The satellites in the first ephemeris data are screened out according to connection vectors between the satellites and the mobile station 140 in the navigation coordinate system so that first observable satellites whose satellite elevation angle is greater than a preset elevation angle threshold are obtained. The satellite with a negative connection vector from the mobile station 140 to the satellite in the navigation coordinate system is below the plane where the self-propelled device 100 is located and may be directly eliminated, thereby improving the data processing efficiency. By comparing the first observable satellites in the first ephemeris data with the second observable satellites in the second ephemeris data, the blocked satellites that exist in the first ephemeris data but do not exist in the second ephemeris data can be determined. As shown in FIG. 4, each circle marks an observable satellite of the self-propelled device 100 at the current observation point, and the number in the circle is the signal-to-noise ratio of the observable satellite, that is, the power ratio of the effective signal to the noise of the channel transmission between the mobile station 140 and the observable satellite. In some cases, the preceding satellite screening process may be performed in conjunction with the satellite signal-to-noise ratio. In FIG. 4, the satellite azimuths are marked in a circle at intervals of 45° on the outer circumference, 0° is due north, and 90° due east, 180° due south, and 270° due west are arranged clockwise. The line connecting the observable satellite to the center of the circle may indicate the satellite azimuth. In FIG. 4, multiple concentric circles at intervals of 15° mark satellite elevation angles, and the concentric circle where the observable satellite falls may indicate the satellite elevation angle. The satellite azimuth and the satellite elevation angle can indicate the relative position between the observable satellite and the self-propelled device 100 and can be used for screening and determining the blocked satellites.

It is to be noted that in some cases, for example, when the satellites are below the horizon or the elevation angles of the satellites are too low, the communication between some satellites in the first ephemeris data and the mobile station 140 is naturally blocked, and these satellites in the first ephemeris data cannot be used for positioning the mobile station 140. Therefore, these satellites need to be screened out from the first ephemeris data before the blocked satellites are determined, thereby eliminating the adverse effects that these satellites may have on the determination of the blocked satellites.

During implementation, the base station 200 pre-stores the base station installation position. After receiving the satellite observation data of the base station 200 from the satellite system 300, that is, after receiving the second satellite observation data, the base station 200 calculates the positioning position to obtain the base station positioning position, and then the base station 200 calculates the corresponding differential data according to the base station installation position and the base station positioning position. Further, the base station 200 sends the differential data to the self-propelled device 100, the self-propelled device 100 acquires mobile station positioning data based on the satellite observation data of the self-propelled device 100 acquired from the satellite system 300 for positioning, that is, the first satellite observation data, and then based on the mobile station positioning data and the differential data, the self-propelled device 100 calculates the differential positioning coordinates of the mobile station 140, that is, the actual position of the mobile station.

Further, the self-propelled device 100 converts the actual position of the mobile station into the navigation coordinate system and converts the satellite coordinates of all the satellites in the first ephemeris data into satellite coordinates in the navigation coordinate system. Then, one-to-one corresponding connection vectors are established according to the actual position of the mobile station and the satellite coordinates, the satellite elevation angles corresponding to the satellites in the first ephemeris data are calculated according to the connection vectors, and the satellite elevation angle is the elevation angle of the satellite relative to the mobile station 140 in the navigation coordinate system. During implementation, an elevation angle threshold is preset to determine whether the elevation angle of each satellite is greater than the elevation angle threshold. If the elevation angle of the satellite is greater than the elevation angle threshold, it means that the satellite in the first ephemeris data is not theoretically below the horizon or the elevation angle is too low, and the information of the satellite is retained in this case. If the elevation angle of the satellite is not greater than the elevation angle threshold, it means that the satellite in the first ephemeris data may theoretically be below the horizon or the elevation angle is too low, and in this case, the corresponding satellite information may be screened out from the first ephemeris data so that the first screened ephemeris data is obtained. Furthermore, by comparing the first screened ephemeris data with the second ephemeris data, the satellites that exist in the first screened ephemeris data but do not exist in the second ephemeris data are determined and recorded as the blocked satellites. Then, the blocking condition around the self-propelled device 100 is determined based on the number of blocked satellites and the positions of the blocked satellites relative to the self-propelled device 100. In this manner, the movement route of the self-propelled device 100 can be re-planned based on the blocking condition, thereby preventing the obstruction from adversely affecting the navigation control process of the self-propelled device 100.

In an example, the controller 150 in the self-propelled device 100 is configured to determine the blocking condition of the mobile station 140 according to at least the number of the blocked satellites and the satellite azimuths.

During implementation, by comparing the second ephemeris data with the first ephemeris data in which some satellites are screened out, for example, by comparing the satellite numbers in the second ephemeris data with the satellite numbers in the first ephemeris data in which some satellites are screened out, the blocked satellites are obtained. Further, the satellite azimuth of each blocked satellite relative to the mobile station 140 is calculated according to the actual position of the mobile station and the satellite coordinates of each blocked satellite. Further, based on the number of blocked satellites, the blocking condition around the mobile station 140 is determined according to the satellite azimuths. It is to be noted that in the case where blocked satellites exist in multiple azimuth intervals and the number of blocked satellites in each azimuth interval exceeds a threshold, it may be determined that the obstruction is serious.

In an example, the controller 150 in the self-propelled device 100 is configured to determine blocking directions of the self-propelled device 100 according to satellite azimuths of the blocked satellites and plan and control a traveling path of the traveling assembly 120 according to the blocking directions.

It is to be noted that the blocking direction of the self-propelled device 100 is the direction of the obstruction relative to the self-propelled device 100, that is, the direction of the blocked satellite relative to the self-propelled device 100.

During implementation, after the satellite azimuths of the blocked satellites relative to the self-propelled device 100 are determined, the blocking directions are determined based on the satellite azimuths and the actual position of the mobile station of the self-propelled device 100, and then the traveling path of the traveling assembly 120 is planned and controlled by avoiding the blocking directions, thereby preventing the self-propelled device 100 from losing contact with the satellite system 300 during movement and further preventing the self-propelled device 100 from losing accurate positioning and navigation control during movement. In this manner, the stability and safety of the operation process of the self-propelled device 100 can be improved.

In an example, the controller 150 in the self-propelled device 100 is configured to obtain third ephemeris data of the base station 200 according to the satellite observation data of the base station 200, compare the satellites in the first ephemeris data with the satellites in the third ephemeris data, and determine the blocking condition of the base station 200 according to the satellites that exist in the first ephemeris data but do not exist in the third ephemeris data.

It is to be noted that an object that may block the communication may be temporarily stored around the base station 200, making it difficult for the base station 200 to establish a normal and stable communication connection with the satellite system 300 and/or the self-propelled device 100. Therefore, the blocking condition around the base station 200 needs to be determined, thereby notifying relevant personnel to clear the obstruction around the base station 200.

During implementation, the base station 200 receives the satellite observation data corresponding to the base station 200 sent by the satellite system 300, that is, the second satellite observation data, where the second satellite observation data can reflect the satellite information of the observable satellites that actually participate in positioning the base station 200 and are in the satellite system 300, and the base station 200 forwards the second satellite observation data to the self-propelled device 100. The controller 150 of the self-propelled device 100 may obtain the third ephemeris data corresponding to the base station 200 according to the second satellite observation data, and the third ephemeris data includes the satellite numbers and satellite coordinates of the observable satellites of the base station 200, where the observable satellites actually participate in positioning the base station 200 and are in the satellite system 300. At the same time, the self-propelled device 100 downloads the first ephemeris data from the Internet 400, and the first ephemeris data includes the satellite numbers and satellite coordinates of all the satellites in the satellite system 300. Then, the self-propelled device 100 compares the third ephemeris data with the first ephemeris data and determines the satellites that exist in the first ephemeris data but do not exist in the third ephemeris data, that is, the satellites that are blocked by some objects and fail to establish a communication connection with the base station 200, which are recorded as blocked satellites. Further, the azimuths of the blocked satellites relative to the base station 200 are calculated, and then the blocking condition of the base station 200 is determined based on the number of blocked satellites and the satellite azimuths.

In an example, the controller 150 in the self-propelled device 100 is further configured to transmit the blocking condition of the mobile station 140 or the blocking condition of the base station 200 to an external device through the Internet communication module 130.

During implementation, after the self-propelled device 100 determines the blocking condition of the mobile station 140 and/or the blocking condition of the base station 200, the self-propelled device 100 further transmits the blocking condition of the mobile station 140 and/or the blocking condition of the base station 200 to the external device through the Internet communication module 130 so that relevant personnel can timely understand the blocking condition of the mobile station 140 and/or the blocking condition of the base station 200 through the external device to implement appropriate countermeasures, thereby improving the stability of the operation of the mobile station 140 and/or the base station 200. The external device includes a user device such as a smartphone, a tablet computer, or a portable computer and further includes a server or a server cluster that implements unified supervision such as a blocking detection cloud platform.

In an example, referring to FIG. 3, the self-propelled device 100 further includes an alarm device 160 configured to issue an alarm prompt in the case where the blocking condition of the mobile station 140 or the blocking condition of the base station 200 is serious.

During implementation, after the self-propelled device 100 determines the blocking condition of the mobile station 140 and/or the blocking condition of the base station 200, the severity of the blocking condition of the mobile station 140 and/or the blocking condition of the base station 200 is evaluated, and in the case where the severity exceeds a preset severity threshold, for example, in the case where the number of blocked satellites exceeds a threshold or the azimuth range of the blocked satellite exceeds a threshold, the alarm device 160 may issue an alarm prompt so that relevant personnel can timely understand the blocking condition of the mobile station 140 and/or the blocking condition of the base station 200 to implement appropriate countermeasures, thereby improving the stability of the operation of the mobile station 140 and/or the base station 200. The alarm device 160 includes a buzzer, a warning light, or the like.

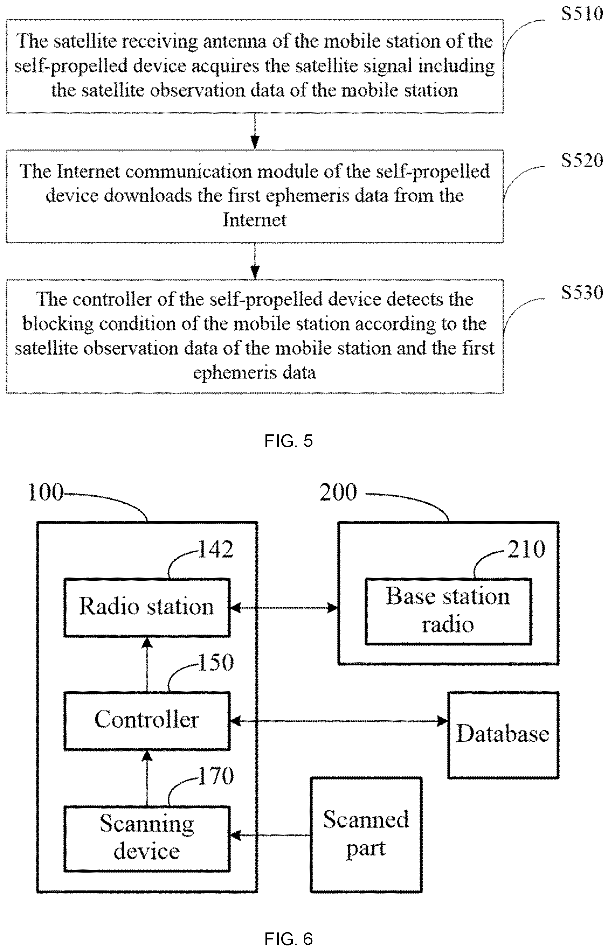

FIG. 5 is a flowchart of a blocking detection method for a self-propelled device according to an example of the present invention. Referring to FIG. 5, the method may be performed by the self-propelled device 100 described above and, of course, may be performed by another device. The method includes the steps below.

In S510, the satellite receiving antenna 141 of the mobile station 140 of the self-propelled device 100 acquires the satellite signal including the satellite observation data of the mobile station 140.

In S520, the Internet communication module 130 of the self-propelled device 100 downloads the first ephemeris data from the Internet 400.

In S530, the controller 150 of the self-propelled device 100 detects the blocking condition of the mobile station 140 according to the satellite observation data of the mobile station 140 and the first ephemeris data.

In some examples, the controller 150 obtains the second ephemeris data of the mobile station 140 according to the satellite observation data of the mobile station 140, compares the satellites in the first ephemeris data with the satellites in the second ephemeris data, and determines the blocking condition of the mobile station 140 according to the satellites that exist in the first ephemeris data but do not exist in the second ephemeris data.

In some examples, the controller 150 calculates coordinates of the mobile station 140 according to at least the satellite observation data of the mobile station 140 and converts coordinates of the satellites in the first ephemeris data and the coordinates of the mobile station 140 into the navigation coordinate system of the self-propelled device 100; screens out the satellites in the first ephemeris data according to connection vectors between the satellites and the mobile station 140 in the navigation coordinate system to obtain the first observable satellites whose satellite elevation angle is greater than the preset elevation angle threshold; and compares the first observable satellites in the first ephemeris data with second observable satellites in the second ephemeris data to determine blocked satellites that exist in the first ephemeris data but do not exist in the second ephemeris data.

In some examples, the controller 150 determines the blocking condition of the mobile station 140 according to at least the number of the blocked satellites and the satellite azimuths.

In some examples, the controller 150 determines the blocking directions of the self-propelled device 100 according to the satellite azimuths of the blocked satellites and plans and controls the traveling path of the traveling assembly 120 according to the blocking directions.

In some examples, the controller 150 further detects the blocking condition of the base station 200 according to the satellite observation data of the base station 200 and the first ephemeris data.

In some examples, the controller 150 obtains the third ephemeris data of the base station 200 according to the satellite observation data of the base station 200, compares the satellites in the first ephemeris data with the satellites in the third ephemeris data, and determines the blocking condition of the base station 200 according to the satellites that exist in the first ephemeris data but do not exist in the third ephemeris data.

In some examples, the controller 150 further transmits the blocking condition of the mobile station 140 or the blocking condition of the base station 200 to the external device through the Internet communication module 130.

In some examples, the alarm device 160 of the self-propelled device 100 issues an alarm prompt in the case where the blocking condition of the mobile station 140 or the blocking condition of the base station 200 is serious.

FIG. 5 is a flowchart of a blocking detection method for a self-propelled device in an example. It is to be understood that, although various steps in the flowchart of FIG. 5 are displayed in sequence as indicated by the arrows, these steps are not necessarily performed in the sequence indicated by the arrows; unless otherwise expressly stated herein, there is no strict sequence restriction on the execution of these steps, and these steps may be performed in other sequences; and at least part of the steps in FIG. 5 may include multiple substeps or multiple stages, these substeps or stages are not necessarily performed at the same moment, but may be performed at different moments, and these substeps or stages are not necessarily performed in sequence, but may be performed in turn or alternately with other steps or at least part of the substeps or stages of other steps.

In the self-propelled device and the blocking detection method therefor described above, the satellite signal including the satellite observation data of the self-propelled device received by the mobile station is acquired, the first ephemeris data is downloaded from the Internet, and then the satellite observation data of the self-propelled device and the first ephemeris data are processed so that the blocking condition of the self-propelled device is obtained. In this manner, the driving route of the self-propelled device is adjusted based on the blocking condition, thereby reducing the adverse effects of external objects blocking the navigation control of the self-propelled device.

Referring to FIGS. 1 and 6, in an example, the self-propelled device 100 may include the controller 150 and a scanning device 170. The scanning device 170 is electrically or communicatively connected to the controller 150 and is configured to scan a scanned part to obtain an identity code of the scanned part. The controller 150 is configured to query a database according to the identity code and acquire a map corresponding to the identity code.

In this example, the self-propelled device 100 may include one or more of an automatic mower, an automatic snow thrower, an automatic cleaning device, and an automatic irrigation device. The self-propelled device 100 can perform corresponding work tasks at the work sites, and the following two cases are included: the same self-propelled device 100 travels between different work sites; and different types of self-propelled devices 100 perform different tasks at the same work site. When the self-propelled device 100 first arrives at the preset work site, the staff needs to set the scanned part at the work site. The device body of the self-propelled device 100 may be provided with the scanning device 170 for scanning the scanned part. The scanning device 170 scans the scanned part set at the work site, thereby acquiring the identity code of the scanned part. The identity code is used for representing the identity information of the scanned part. The scanned parts set at different work sites are different, and the identity codes obtained by scanning different scanned parts at different work sites are different. In other words, the work site, the scanned part, and the identity code have a one-to-one correspondence. In a work task of the self-propelled device 100, since the scanned part set at the current work site of this task is scanned, the identity information represented by the obtained identity code corresponds to the current work site.

When the self-propelled device 100 first arrives at the preset work site, the staff sets the scanned part at the work site, and the self-propelled device 100 constructs an electronic map corresponding to the work site. The staff may set the virtual boundary of the region in which the self-propelled device 100 is movable at the work site on the electronic map, and then the self-propelled device 100 stores the constructed map data into a preset database and also stores the identity code corresponding to the work site, that is, the identity code corresponding to the scanned part, into the database. During the storage process, the correspondence between the work site, the scanned part, the identity code, and the map is established. It is to be understood that the map data of the identity code corresponding to a certain work site or scanned part stored in the database may include at least the data of the electronic map with the virtual boundary of the region defined upon initial arrival and may further include other types of data such as obstacle information and user information. In addition, the controller 150 may be provided on the device body of the self-propelled device 100. The controller 150 can query the database according to the identity code scanned by the scanning device 170 and acquire the map corresponding to the identity code.

During implementation, after the self-propelled device 100 arrives at the work site at which the self-propelled device 100 has arrived before, the scanning device 170 scans the scanned part set at the work site last time, thereby acquiring the identity code corresponding to the scanned part, the scanning device 170 sends the identity code to the controller 150, and the controller 150 queries the database based on the identity code and acquires the map corresponding to the identity code so that the operation of the self-propelled device 100 is controlled according to the map.

Through the implementation of the preceding solution, when the self-propelled device 100 arrives at the work site at which the self-propelled device 100 has arrived before, instead of reconstructing the map with the virtual boundary, the scanned part is scanned to obtain the identity code. In this manner, the previously generated map may be directly called from the database so that the time in building the map is saved, thereby improving the working efficiency of the self-propelled device 100 and the user experience.

In an example, the controller 150 is further configured to, in the case where the map corresponding to the identity code is not capable of being obtained by querying the database, construct the map corresponding to the identity code at the work site and store the map into the database.

It is to be noted that if the self-propelled device 100 first arrives at the preset work site, the staff has not constructed a corresponding map for the work site, nor has the map been stored into the database; therefore, even if the scanned part is set at the work site and the scanning device 170 scans the scanned part to acquire the identity code, the controller 150 cannot acquire the corresponding map by querying the database according to the identity code.

During implementation, after the self-propelled device 100 arrives at the preset work site, the scanning device 170 scans the scanned part set at the work site to obtain the corresponding identity code and then sends the identity code to the controller 150. The controller 150 queries the database to determine whether a map corresponding to the identity code exists. If the map corresponding to the identity code does not exist, it means that the work site corresponding to the identity code is not configured with a corresponding map in the database. In this case, the self-propelled device 100 may construct a map with a virtual boundary on-site at the work site, store the constructed map into the database, and establish a connection between the map and the corresponding identity code.

Through the implementation of the preceding solution, when it is found that the map of the current work site does not exist in the database, the corresponding map may be constructed in time and stored into the database so that when the self-propelled device 100 arrives at the current work site again in the future, the corresponding map can be directly obtained from the database for use, thereby improving the working convenience when the self-propelled device 100 arrives at the current work site again in the future.

In an example, referring to FIGS. 1 and 6, the self-propelled device 100 further includes the radio station 142, and the controller 150 is further configured to query the database according to the identity code, acquire base station position information corresponding to the identity code, and transmit the base station position information to the base station 200 through the radio station 142.

It is to be noted that when the self-propelled device 100 is controlled to move at the preset work site, the self-propelled device 100 needs to be positioned, thereby acquiring the accurate position of the self-propelled device 100. To position the self-propelled device 100, a fixed base station 200 may be set at the work site of the self-propelled device 100 for differential positioning, and the position information of the base station 200 may be recorded in the database and linked to the corresponding identity code. The radio station 142 is further provided on the device body of the self-propelled device 100, and the radio station 142 is used for sending the base station position information recorded in the queried database to the corresponding base station 200.

During implementation, after the self-propelled device 100 arrives at the preset work site, the scanning device 170 scans the scanned part set at the work site to acquire the corresponding identity code and then sends the identity code to the controller 150. The controller 150 queries the database, acquires the base station position information corresponding to the identity code, and then sends the base station position information to the corresponding base station 200 through the radio station 142.

Through the implementation of the preceding solution, the self-propelled device 100 may send the base station position information of the base station 200 to the base station 200 before officially starting work so that the base station 200 can calculate the corresponding differential data based on the base station position information and send the differential data to the self-propelled device 100. In this manner, the self-propelled device 100 can calculate the accurate position of the self-propelled device 100 based on the differential data, thereby facilitating the accurate navigation of the self-propelled device 100 during the operation of the self-propelled device 100. In some cases, the base station 200 further stores the position information of the base station 200 fixedly mounted at the current work site. After receiving the base station position information sent by the self-propelled device 100, the base station 200 may compare the information recorded in the database with the information stored in the base station 200, thereby achieving accurate positioning in the case where the data is consistent.

In an example, referring to FIG. 6, the base station 200 is equipped with a base station radio 210; in the case where the self-propelled device 100 is not capable of obtaining base station position information corresponding to the identity code by querying the database, in response to a request from the self-propelled device 100 to acquire the base station position information, the base station 200 transmits the base station position information of the base station 200 to the self-propelled device 100 through the base station radio 210, and the self-propelled device 100 stores the base station position information into the database.

It is to be noted that the base station 200 can determine the base station position information of the base station 200. The base station 200 is provided with the base station radio 210, and the base station radio 210 is used for sending the base station position information to the self-propelled device 100. In addition, if the controller 150 in the self-propelled device 100 fails to acquire the corresponding information of the base station 200 by querying the database according to the identity code, the self-propelled device 100 actively sends a request to acquire the base station position information to the base station 200.

During implementation, after the self-propelled device 100 arrives at the preset work site, the scanning device 170 scans the scanned part set at the work site to acquire the corresponding identity code and then sends the identity code to the controller 150. According to the identity code, the controller 150 determines whether the base station position information corresponding to the identity code exists in the database. If the base station position information corresponding to the identity code does not exist in the database, it means that the base station position information corresponding to the identity code is not stored in the database in advance. Then, the self-propelled device 100 actively sends a request to acquire the base station position information to the base station 200. After receiving the corresponding request, the base station 200 sends the current base station position information to the self-propelled device 100 through the base station radio 210. After receiving the base station position information, the self-propelled device 100 further stores the base station position information into the database and establishes a connection between the base station position information and the corresponding identity code. Through the implementation of the preceding solution, when the self-propelled device 100 fails to obtain the corresponding base station position information by querying the database, the self-propelled device 100 may acquire the corresponding base station position information from the base station 200 and store the base station position information into the database so that the self-propelled device 100 can directly acquire the base station position information from the database in the future, thereby improving the efficiency of the self-propelled device 100 acquiring the base station position information.

In an example, the database is a local database or a cloud node.

It is to be noted that the database in the preceding examples may be a local database or a cloud node communicatively connected to the self-propelled device 100.

In an example, the scanned part is disposed on a base 700 of the base station 200.

It is to be noted that the base 700 on which the base station 200 is mounted is preset at the work site. After the self-propelled device 100 arrives at the corresponding work site, the staff mounts the base station 200 corresponding to the self-propelled device 100 on the preset base 700. In addition, in this example, the scanned part may also be set on the base 700.

In an example, the scanned part is disposed at the work site of the self-propelled device 100.

It is to be noted that the scanned part may be set at a certain position at the work site where the self-propelled device 100 needs to work.

In an example, the scanning device 170 of the self-propelled device 100 is a camera, and the scanned part is a QR code or a barcode.

It is to be noted that, in this example, the scanning device 170 is a camera mounted on the self-propelled device 100, and in this example, the scanned part is a QR code or a barcode that can be scanned by the camera.

In an example, after obtaining the map corresponding to the identity code through querying, the self-propelled device 100 performs the current work task at the current work site according to the map.

It is to be noted that after the self-propelled device 100 queries the database based on the acquired identity code and obtains the corresponding map, further, the current work task at the current work site is performed based on the map. In a specific example, the automatic mower may query the database based on the acquired identity code to obtain the corresponding map and then plan the traveling path based on the map, thereby performing the mowing task and avoiding obstacles at the work site.

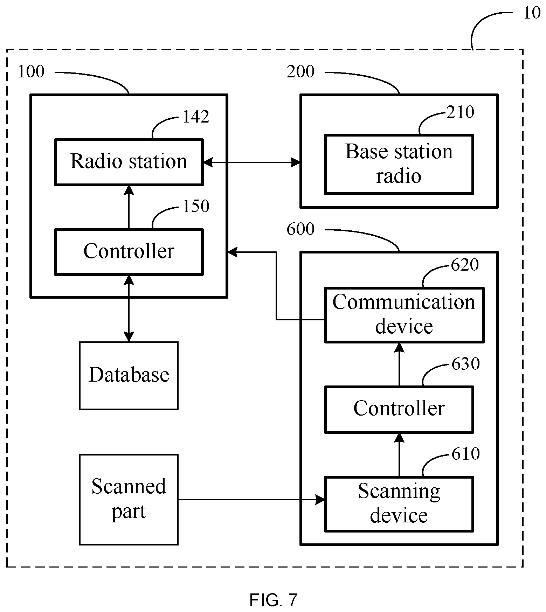

Referring to FIG. 7, this example provides a work system 10 of the self-propelled device 100. The work system 10 of the self-propelled device 100 may include the self-propelled device 100, the base station 200, and an external device 600. The self-propelled device 100 is configured to autonomously travel and perform a work task. The base station 200 is configured to acquire satellite observation data, generate differential data according to the analysis of the satellite observation data, and transmit the differential data to the self-propelled device 100. The external device 600 may include a scanning device 610, a communication device 620, and a controller 630. The controller 630 is electrically connected to the scanning device 610 and the communication device 620 and is configured to scan the scanned part through the scanning device 610 to acquire the identity code of the scanned part and transmit the identity code to the self-propelled device 100 through the communication device 620.

It is to be noted that the present invention records the scanning device 170 and the scanning device 610, which are the scanning device 170 in the self-propelled device 100 and the scanning device 610 in the external device 600, respectively, and the two types of scanning devices can be distinguished by reference numerals hereinafter. Similarly, the present invention records the controller 150 and the controller 630, which are the controller 150 in the self-propelled device 100 and the controller 630 in the external device 600, respectively, and the two types of controllers can be distinguished by reference numerals hereinafter.

The self-propelled device 100 is communicatively connected to the corresponding base station 200. The base station 200 is communicatively connected to the satellite system 300 and is used for acquiring the satellite observation data of the base station 200 from the satellite system 300, analyzing the satellite observation data to acquire the differential data, and then sending the differential data to the self-propelled device 100 so that the self-propelled device 100 can calculate the accurate position of the self-propelled device 100 based on the differential data. In addition, the self-propelled device 100 is communicatively connected to the external device 600. Specifically, the external device 600 includes the scanning device 610, the communication device 620, and the controller 630. Under the control of the controller 630, the scanning device 610 may be used for scanning the scanned part preset at the work site to acquire the corresponding identity code, and the communication device 620 may be used for establishing a communication connection with the self-propelled device 100 and sending the identity code obtained by scanning to the self-propelled device 100.

During implementation, the self-propelled device 100 calculates the accurate position of the self-propelled device 100 by receiving the differential data sent by the base station 200; at the same time, the staff may scan the scanned part at the work site through the external device 600 to acquire the corresponding identity code and then send the identity code to the self-propelled device 100 so that the self-propelled device 100 can perform automated work at the work site based on the identity code and the accurate position of the self-propelled device 100.

Through the implementation of the preceding solution, the automated work of the self-propelled device 100 at the work site can be achieved easily, thereby improving the automation level of the self-propelled device 100 during working.

Similarly, in an example, the scanned part is disposed on the base 700 of the base station 200. The base 700 on which the base station 200 is mounted is fixed at the work site, and the scanned part for the scanning device 610 to scan may be set on the base 700. During implementation, if the external device 600 needs to scan the scanned part, the scanning device 610 on the external device 600 scans the scanned part on the base to acquire the identity code corresponding to the scanned part, and then the communication device 620 sends the identity code to the self-propelled device 100.

Similarly, in an example, the scanning device 610 of the external device 600 is a camera, and the scanned part is a QR code or a barcode. It is to be noted that, in this example, the scanning device 310 on the external device 300 is specifically a camera for scanning the scanned part, and the scanned part is specifically a QR code or a barcode. During implementation, when the scanned part needs to be scanned, the camera may be controlled to scan the QR code or the barcode to acquire the corresponding identity code.

In an example, the scanning device 610 of the external device 600 is an RFID reader/writer, and the scanned part is an RFID tag. It is to be noted that, in this example, the scanning device 610 on the external device 600 is specifically an RFID reader/writer that can be communicatively connected to the scanned part, and the scanned part is specifically an RFID tag. During implementation, when the scanned part needs to be scanned, the RFID reader/writer may be controlled to approach the RFID tag to acquire the corresponding identity code.

In an example, the self-propelled device 100 queries the database according to the identity code and acquires the map corresponding to the identity code. It is to be noted that, in this example, a database is provided in which a map with a virtual boundary constructed for the work site is pre-stored. After acquiring the identity code, further, the self-propelled device stores the identity code into the database and establishes a connection between the identity code and the corresponding map. During implementation, when the self-propelled device 100 needs to work at the work site based on the map, the self-propelled device 100 first queries the database based on the acquired identity code and acquires the map corresponding to the identity code.

In an example, in the case where the self-propelled device 100 is not capable of obtaining the map corresponding to the identity code by querying the database, the self-propelled device 100 constructs the map corresponding to the identity code at the work site and stores the map into the database. It is to be noted that if the self-propelled device 100 first arrives at the preset work site, the map corresponding to the work site is not stored in the database. During implementation, after the self-propelled device 100 arrives at the preset work site, the staff obtains the identity code corresponding to the scanned part by scanning through the external device 600, the external device 600 sends the identity code to the self-propelled device 100, and then based on the identity code, the self-propelled device 100 determines whether a corresponding map exists in the database. If the corresponding map does not exist in the database, the self-propelled device 100 constructs the map corresponding to the identity code at the work site, stores the constructed map into the database, and establishes a connection between the map and the corresponding identity code.

Through the implementation of the preceding solution, when the self-propelled device arrives at the work site again to work, the corresponding map can be directly acquired from the database after the identity code is obtained by scanning through the external device 600, thereby improving the efficiency of acquiring the map and further improving the working efficiency of the self-propelled device 100.

In an example, the self-propelled device 100 is equipped with the radio station 142, and the self-propelled device 100 queries the database according to the identity code, acquires base station position information corresponding to the identity code, and transmits the base station position information to the base station 200 through the radio station 142. It is to be noted that, in this example, the self-propelled device 100 is further provided with the radio station 142. In addition, the database also pre-stores the base station position information corresponding to the identity code, and the radio station 142 is used for sending the base station position information to the base station 200. During implementation, after the self-propelled device 100 acquires the identity code corresponding to the work site, further, the self-propelled device 100 queries the database based on the identity code, acquires the corresponding base station position information, and then sends the base station position information to the corresponding base station 200 through the radio station 142.

In an example, the base station 200 is equipped with the base station radio 210; in the case where the self-propelled device 100 is not capable of obtaining base station position information corresponding to the identity code by querying the database, in response to a request from the self-propelled device 100 to acquire the base station position information, the base station 200 transmits the base station position information of the base station 200 to the self-propelled device 100 through the base station radio 210, and the self-propelled device 100 stores the base station position information into the database.

It is to be noted that, in this example, the base station 200 is provided with the base station radio 210 communicatively connected to the self-propelled device 100; in addition, on the premise that the self-propelled device 100 fails to obtain the corresponding base station position information by querying the database based on the identity code, the self-propelled device 100 actively sends a request to acquire the base station position information to the base station 200; after receiving the corresponding request, the base station 200 sends the base station position information stored or generated by the base station 200 to the self-propelled device 100 through the base station radio 210 so that the self-propelled device 100 stores the received base station position information into the database.

During implementation, after acquiring the identity code, the self-propelled device 100 further queries the database according to the identity code to determine whether the corresponding base station position information exists. If the corresponding base station position information does not exist, the self-propelled device 100 actively sends a request to acquire the base station position information to the base station 200; after receiving the request, the base station 200 sends the base station position information stored or generated by the base station 200 to the self-propelled device 100 through the base station radio 210; after receiving the base station position information, the self-propelled device 100 stores the base station position information into the database and establishes a connection between the base station position information and the corresponding identity code.

In an example, the controller 630 of the external device 600 is further configured to query the database according to the identity code, acquire the map and/or base station position information corresponding to the identity code, and transmit the map and/or base station position information to the self-propelled device 100 through the communication device 620.

It is to be noted that the database pre-stores the map and/or base station position information corresponding to the identity code.

During implementation, the controller 630 queries the database for the corresponding map and/or base station position information according to the identity code, and then the communication device 620 sends the map and/or base station position information to the self-propelled device 100.

In addition, in some examples, the maps of different work sites stored in the database may not be indexed by the identity codes obtained by scanning the scanned parts. For example, the map of each work site stored in the database may be indexed by the base station position information of the base station 200 at the current work site.

Specifically, after the self-propelled device 100 first arrives at a work site, the self-propelled device 100 constructs the map of the work site and stores the constructed map into the database. After arriving at the work site next time, the self-propelled device 100 may use the radio station 142 to receive the base station position information from the base station 200 and query the database for a map whose map range covers the preceding base station position information, and the map may be loaded for positioning and navigation during subsequent work. The base station position information transmitted by the base station 200 to the self-propelled device 100 through the base station radio 210 may be the base station position information stored by the base station 200. In some cases where the base station 200 is detachably mounted at the work site and transferred between different work sites, the base station position information transmitted by the base station 200 to the self-propelled device 100 may be the base station position information calculated after the satellite observation data transmitted by the satellite system is received. In other cases, after the self-propelled device 100 first arrives at a work site, in addition to constructing the map, the self-propelled device 100 may request the position information of the base station 200 from the base station 200 at the work site through the radio station 142, store the constructed map and the received base station position information into the database, and establish a correspondence between the map and the base station position information during the storage process. After arriving at the work site next time, the self-propelled device 100 may directly query the database for the map corresponding to the base station position information after receiving the base station position information transmitted by the base station 200.

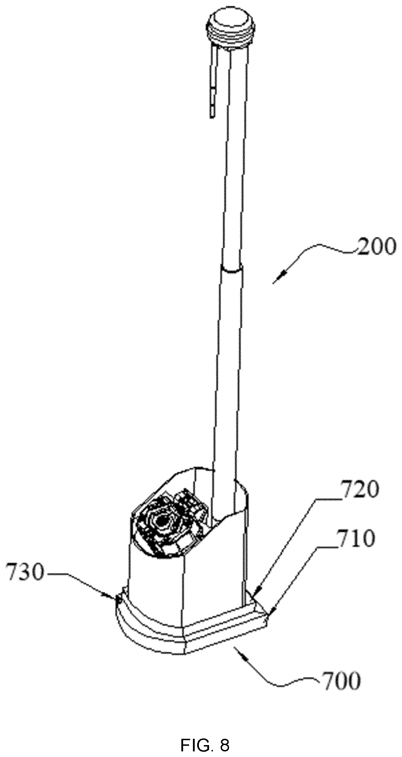

Referring to FIG. 8, this example provides the base 700, where the base 700 may include a fixing mounting portion 710 and a base station coupling portion 720. The fixing mounting portion 710 is used for fixing the base 700 at the fixed position at the work site, and the base station coupling portion 720 is used for placing or mounting a differential positioning base station at the fixed position where the base 700 is located.

It is to be noted that the base 700 on which the differential positioning base station is mounted is preset at the work site. During implementation, the base 700 is fixed at the fixed position where the differential positioning base station is mounted at the work site. The fixed position is generally the best position for mounting the differential positioning base station at the current work site obtained through base station addressing. Specifically, the base 700 may be fixed at the preceding fixed position by the fixing mounting portion 710, and the base station coupling portion 720 on the base 700 is used for placement or detachable installation of the differential positioning base station.

In an example, the base 700 further includes an identity mark 730. It is to be noted that, in this example, the base 700 is further provided with the identity mark 730 for the scanning device to scan, that is, a scanned part 730 described above. In an example, the identity mark 730 is a QR code or a barcode. It is to be noted that, in this example, the identity mark 730 is specifically a QR code or a barcode for the scanning device 170 or 610 to scan. During implementation, the scanning device 170 or 610 may acquire the corresponding identity code by scanning the QR code or the barcode.

In an example, the identity mark 730 is an RFID tag. It is to be noted that, in this example, the identity mark 730 is specifically an RFID tag for a communication connection with the scanning device 170 or 610. During implementation, the scanning device 170 or 610 is communicatively connected to the RFID tag to acquire the corresponding identity code.

Through the self-propelled device, the work system of a self-propelled device, and the base described above, when the self-propelled device arrives at an old work site again, the self-propelled device scans the scanned part set at the work site to acquire the identity code of the scanned part and then queries the database to acquire a map with the demarcated work region corresponding to the identity code, and the self-propelled device works directly based on the acquired map without having to reconstruct a map for the current work site, thereby improving the working efficiency of the self-propelled device and the user experience of the customer.

Based on the above, the self-propelled device represented by an automatic mower, an automatic snow thrower, an automatic cleaning device, and an automatic irrigation device usually performs work tasks within a specific work region. The base station and the charging pile need to be provided in the work region. The present invention further provides a charging pile for a self-propelled device, thereby solving the problem of high usage costs of the self-propelled device in the related art by integrating the charging pile and the communication base station.

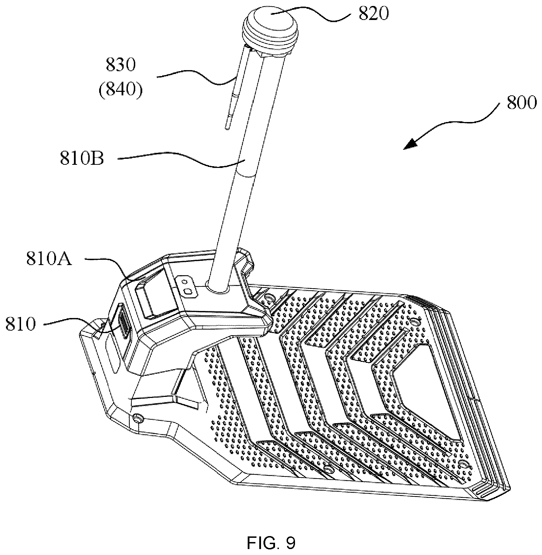

Referring to FIGS. 9 to 11, a charging pile 800 of the present invention includes a charging device 810, a differential positioning device 820, and an Internet communication module 830.

It is to be noted that the present invention records the Internet communication module 130 and the Internet communication module 830, which are the Internet communication module 130 in the self-propelled device 100 and the Internet communication module 830 in the charging pile 800, respectively. The two types of Internet communication modules can be distinguished by reference numerals hereinafter.

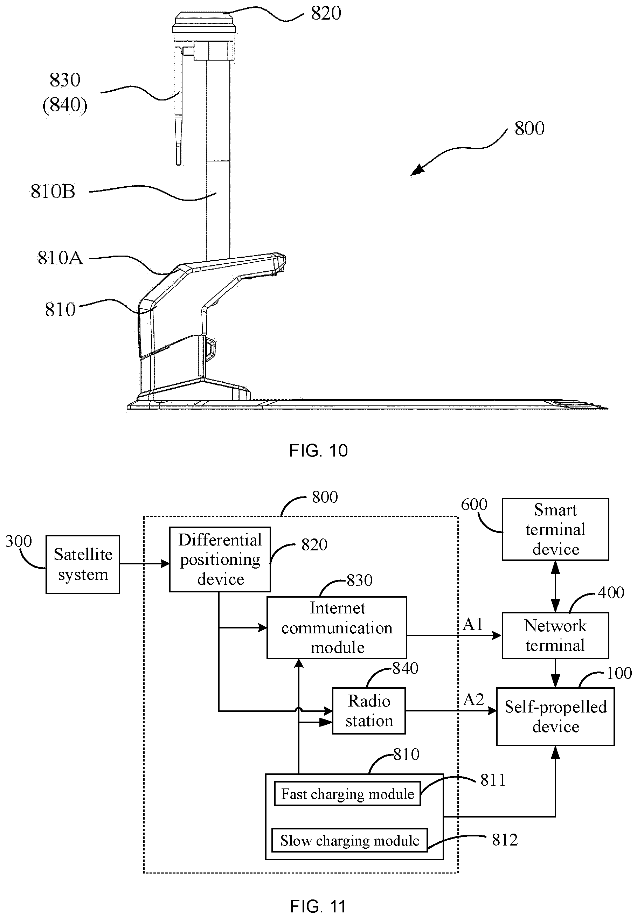

As shown in FIG. 11, the charging device 810 charges the self-propelled device 100 connected to the charging pile 800 and generates charging data. In the present invention, the charging device 810 may be provided with a battery pack and a voltage conversion module, and the voltage conversion module is used for performing voltage level and alternating current (AC)/direct current (DC) conversion processing on the output voltage of the battery pack, thereby achieving AC charging or DC charging. Typically, the charging data includes, but is not limited to, any one or a combination of start/stop state data, real-time power of the charging pile, charging duration, and charging process data. The charging process data includes, but is not limited to, the charging modes (fast charging, slow charging, pre-charging, constant current charging, constant voltage charging, trickle charging, and the like), charge voltage, charge current, charge power, charging gun temperature, and other data.

As shown in FIG. 11, the differential positioning device 820 acquires the satellite observation data of the charging pile 800 and calculates differential data according to the satellite observation data. The satellite observation data may be the position information sent by the satellite system 300. The differential positioning device 820 may acquire the satellite observation data by using real-time kinematic (RTK) carrier phase differential technology. In the present invention, the differential positioning device 820 includes at least a receiver (a Global Positioning System (GPS) receiver or a Global Navigation Satellite System (GNSS) receiver), which is a base station receiving station for implementing the differential positioning process of the self-propelled device 100. At the same time, the self-propelled device 100 is provided with a mobile station receiving station for the differential positioning process. All receivers simultaneously receive respective satellite observation data sent by the satellite system 300. After obtaining the satellite observation data, the differential positioning device 820 generates the differential data by calculating the satellite observation data obtained by the base station receiving station so that the self-propelled device 100 can use the differential data to correct the satellite observation data obtained by the mobile station receiving station, thereby offsetting the common error.

As shown in FIG. 11, the Internet communication module 830 establishes a first communication channel A1 between the charging pile 800 and a network terminal 400 and transmits the charging data and/or differential data to the network terminal 400 based on the first communication channel A1. The Internet communication module 830 may access the Internet 400 using communication protocols such as Transmission Control Protocol/Internet Protocol (TCP/IP) and perform data exchange with a smart terminal device 600 through the Internet 400. Typically, the smart terminal device 600 includes, but is not limited to, a smartphone, a wearable device, a tablet computer, or other portable electronic devices. In the present invention, the network terminal 400 further performs data analysis on the charging data and the differential data and sends a data analysis result to the smart terminal device 600.

Specifically, when the self-propelled device 100 is connected to the charging pile 800 for charging, the charging device 810 collects the charging data in real time. After collecting the charging data transmitted by the charging pile 800, the network terminal 400 performs data analysis on the charging data to determine the charging frequency, power consumption, and other information of the charging pile and further obtain the charging requirements and behavior patterns of the user. After the smart terminal device 600 (such as a mobile phone or a smart wearable device) is connected to the network terminal 400, the network terminal 400 may send recommendation information such as charging schedule settings to the smart terminal device 600.

In some examples, the first communication channel A1 may be any one of a wireless communication channel or a wired communication channel. Typically, the wireless communication channel includes, but is not limited to, a Wi-Fi wireless communication channel or an LTE wireless communication channel.

In some examples, the network terminal 400 is further communicatively connected to the self-propelled device 100, and the network terminal 400 forwards at least one of the differential data or the charging data to the self-propelled device 100. Specifically, the Internet communication module 130 may be mounted on the self-propelled device 100, and a Wi-Fi connection or an LTE connection may be used between the Internet communication module 130 and the network terminal 400. After the self-propelled device 100 is connected to the network terminal 400, the network terminal 400 collects the differential data, the charging data, and other data based on the first communication channel A1 and forwards the differential data, the charging data, and other data to the self-propelled device 100 based on Internet technology. By connecting the charging pile 800 and the self-propelled device 100 to the same Internet, wireless transmission of the differential data, the charging data, and other data is achieved, the data transmission manners of the self-propelled device 100 are expanded, traffic consumption is saved, usage costs are saved, and data loss caused by failure of a single communication manner is avoided.

As shown in FIGS. 9 to 11, the charging pile 800 of the present invention further includes a radio station 840. As shown in FIG. 11, the radio station 840 establishes a second communication channel A2 between the charging device 800 and the self-propelled device 100 and transmits the charging data and/or differential data to the self-propelled device 100 based on the second communication channel A2. The second communication channel A2 is a wireless communication channel. In the present invention, the radio station 840 transmits the charging data and the differential data to at least one self-propelled device 100 in the work region by the unicast or broadcast. The radio station 840 in the charging pile 800 and the radio station 142 in the self-propelled device 100 can be distinguished by reference numerals.

In some examples, the communication priority of the second communication channel A2 is higher than the communication priority of the first communication channel A1, that is, the communication priority of the radio station 840 is higher than the communication priority of the Internet communication module 830. In this example, when the differential data cannot be transmitted to the self-propelled device 100 in the work region through the radio station 840, the charging pile 800 transmits the differential data to the network terminal 400 through the Internet communication module 830.

Specifically, when the self-propelled device 100 cannot receive the differential data through the radio station 840, a notification of radio communication failure is sent to the charging pile 800 through the Internet 400; in response to the preceding notification of radio communication failure, the charging pile 800 transmits the differential data to the network terminal 400 through the Internet communication module 830 and then transmits the differential data to the self-propelled device 100 through the network terminal 400; after the self-propelled device 100 can receive the differential data through the radio station 840, a notification of radio communication recovery is sent to the charging pile 800 through the Internet 400; in response to the preceding notification of radio communication recovery, the charging pile 800 uses the radio station 840 to transmit the differential data. Alternatively, when the charging pile 800 cannot successfully transmit the differential data to the self-propelled device 100 through the radio station 840, for example, the charging pile 800 cannot successfully establish the second communication channel A2 or cannot obtain a response feedback after the self-propelled device 100 receives the differential data, the charging pile 800 transmits the differential data to the network terminal 400 through the Internet communication module 830 and then transmits the differential data to the self-propelled device 100 through the network terminal 400; in response to the recovery of the second communication channel A2 between the charging pile 800 and the self-propelled device 100, the charging pile 800 uses the radio station 840.

In some other examples, the first communication channel A1 and the second communication channel A2 transmit data synchronously, that is, the radio station 840 and the Internet communication module 830 perform data transmission simultaneously. Specifically, while the charging pile 800 transmits the differential data to the self-propelled device 100 through the radio station 840, the charging pile 800 also transmits the differential data to the network terminal 400 through the Internet communication module 830 and then transmits the differential data to the self-propelled device 100 through the network terminal 400.

As shown in FIGS. 9 and 10, the charging device 810 is disposed in a charging pile portion 810A, the differential positioning device 820 and the Internet communication module 830 are integrated into a base station portion 810B, and a detachable connection structure or an integrated structure is adopted between the charging pile portion 810A and the base station portion 810B. The charging device 810 is provided with a battery pack detachably fixed in the housing of the charging pile portion 810A.

Referring to FIG. 11, the charging device 810 includes a fast charging module 811 and a slow charging module 812; the Internet communication module 830 further receives a charging mode instruction sent by the network terminal 400 and controls the fast charging module 811 or the slow charging module 812 to charge the self-propelled device 100. Typically, the charging mode instruction includes, but is not limited to, a trickle charging mode instruction, a fast charging mode instruction, and a slow charging mode instruction. The charging mode instruction is further used for limiting the magnitude of the charge current. In the present invention, the fast charging module 811 may adopt DC charging, the slow charging module 812 may adopt either DC charging or AC charging, and the form of the charge current is not limited.

Specifically, in response to the charging mode instruction (for example, the fast charging mode instruction or the slow charging mode instruction) transmitted by the Internet communication module 830 from the smart terminal device 600, when the charging mode instruction is the fast charging mode instruction, the charging pile 800 controls the charging device to use the fast charging module 811 to charge the self-propelled device 100; and when the charging mode instruction is the trickle charging mode instruction or the slow charging mode instruction, the charging pile 800 controls the charging device 810 to use the slow charging module 812 to charge the self-propelled device 100. By integrating the fast charging mode and the slow charging mode, the two modes may be manually selected through the smart terminal. The fast charging mode is suitable for cases where charging is urgently needed and can complete the charging task quickly; while the slow charging mode is suitable for long-term parking and charging and can better extend the battery lifespan of the self-propelled device; in this manner, the charging requirements in different scenarios are satisfied, which is conducive to improving the user experience.

In some examples, the charging pile 800 is further configured as follows: if the charging pile 800 does not receive the charging mode instruction transmitted by the Internet communication module 830, the charging pile 800 makes a selection according to the work schedule and gives priority to fast charging to a first power level, and for the remaining power, charging in the slow charging mode is performed within the preset time before the start of the schedule until completion (that is, the power reaches 100%), thereby extending the battery lifespan of the self-propelled device.

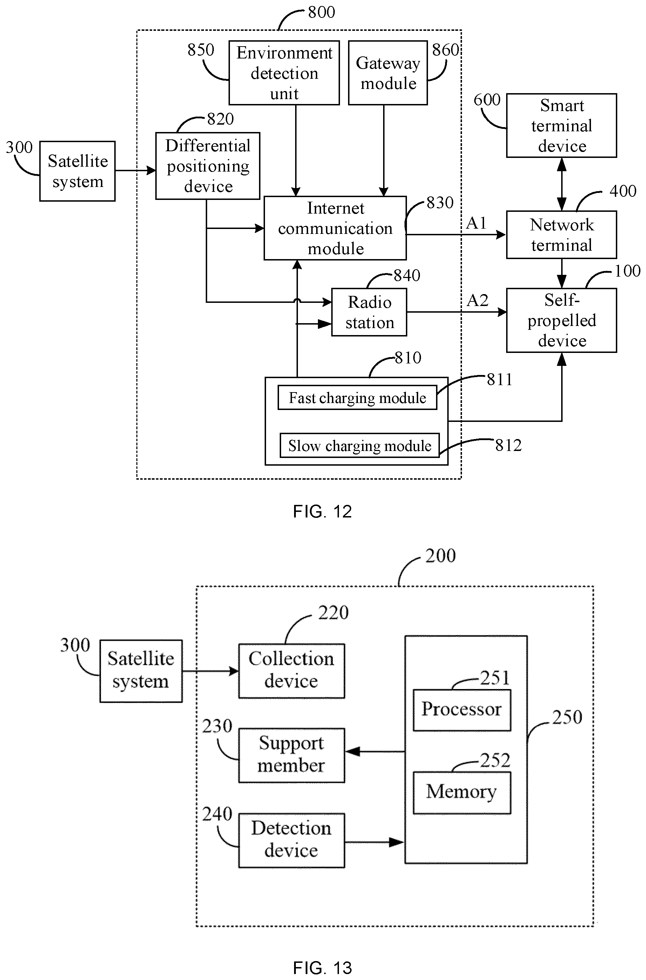

As shown in FIG. 12, the charging pile 800 of the present invention further includes an environment detection unit 850 connected to the Internet communication module 830, where the environment detection unit 850 acquires an environmental parameter around the charging device 810 and transmits the environmental parameter to the network terminal 400 based on the first communication channel A1. Typically, the environmental parameter includes, but is not limited to, temperature and humidity data, illumination data, altitude data, or wind speed. The Internet communication module 830 transmits the environmental parameter to the network terminal 400 so that the network terminal 400 predicts the operation data of the self-propelled device 100 based on the environmental parameter. For example, the case where the self-propelled device 100 is a self-propelled mower is used as an example. Further, the network terminal 400 acquires the cutting height data of the self-propelled mower. After collecting the cutting height data and the temperature and humidity data, the network terminal 400 predicts the lawn growth rate in the work region using a pre-stored mathematical model and configures the mowing height, mowing time, or mowing cycle based on the lawn growth rate. Further, the network terminal 400 forwards the environmental parameter to the self-propelled device 100 so that the self-propelled device 100 performs operations according to the environmental parameter. For example, the self-propelled device 100 predicts the lawn growth rate according to the environmental temperature and humidity data and then configures the mowing height, mowing time, or mowing cycle; or based on the wind speed data, the self-propelled device 100 evaluates whether the operation needs to be terminated. By configuring the environment detection unit, the use scenarios of the charging pile are expanded and the interactive performance between the charging pile and the self-propelled device is improved.

In the present invention, the smart terminal device 600 is connected to the network terminal 400 based on the Internet and then is communicatively connected to the Internet communication module 830 through the network terminal 400. The smart terminal device 600 is provided with a display interface, and the display interface displays at least one of the following: the charging data, the differential data, the environmental parameter, or a data analysis result sent by the network terminal 400.

Specifically, after the self-propelled device 100 enters the work region, the Internet communication module 830 transmits the charging data of the charging device 810, the differential data of the differential positioning device 820, and the environmental parameter in the work region to the network terminal 400, and the network terminal 400 forwards the preceding data to the smart terminal device 600 for display. The smart terminal device 600 displays and monitors the charging process, charging power level, and charging time in real time so that the user can adjust the charging power level and full charging time according to requirements at any time. When the self-propelled device 100 reaches the required charging power level or the user actively terminates charging, the charging pile 800 automatically stops supplying power. The smart terminal device 600 further displays the charging frequency, power consumption, and other information of the charging pile in real time, thereby analyzing the charging requirements and behavior patterns of the self-propelled device 100 and achieving schedule display, configuration, and modification. The smart terminal device 600 further displays the lawn growth rate, mowing height, mowing time, recommendation information sent by the network terminal 400, and mowing cycle in real time so that the user can complete the operation configuration. The terminal display interface displays various data such as user recommendation information, schedules are set according to the charging requirements, time, battery charging states, and power, and the on-off and charge power of the charging pile 800 are automatically controlled, thereby achieving smart and convenient charging management of the charging pile 800.

As shown in FIG. 12, the charging pile 800 for the self-propelled device 100 further includes a gateway module 860, where the gateway module 860 includes, but is not limited to, an Internet connector and a protocol converter. The gateway module 860 establishes a third communication channel A3 between the charging pile 800 and other devices at the preset work site (that is, the work region of the self-propelled device 100) and receives device data from other devices based on the third communication channel A3. The gateway module 860 is further connected to the Internet communication module 830, and the Internet communication module 830 further transmits the device data to the network terminal 400. In the present invention, other devices include, but are not limited to, a self-propelled device or a charging pile management device other than the devices connected to the charging pile 800. The device data includes, but is not limited to, device position information and device management data. By providing the gateway module, the charging pile network can be expanded and the data interaction capability of the system can be improved.

The present invention further provides the base station 200 to solve the problems of losses and positioning deviations caused by the influence of weather factors on the base station, thereby achieving the technical effect of adapting to the weather environment to ensure positioning accuracy and avoid damages and improving the positioning reliability of the base station.

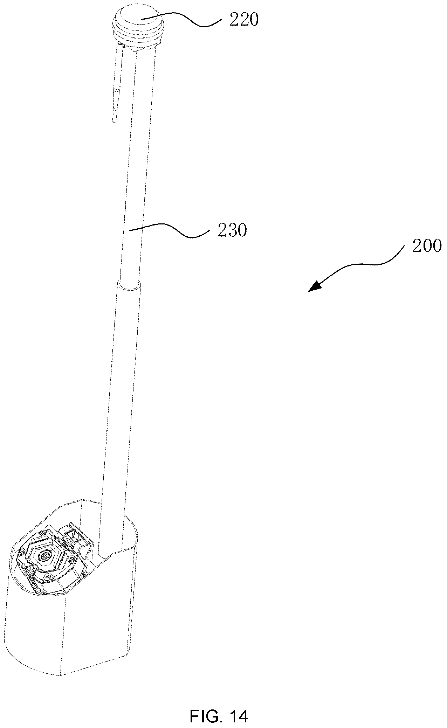

As shown in FIGS. 13 and 14, the base station 200 of the present invention includes a collection device 220, a support member 230, a detection device 240, and a controller 250. The controller 250 in the base station 200 may be distinguished from the controller 150 in the self-propelled device 100 and the controller 630 in the external device 600 by reference numerals.

The detection device 240 acquires a first environmental parameter around the base station 200. The first environmental parameter affects the positioning accuracy of the base station. Typically, the first environmental parameter includes, but is not limited to, any one or a combination of temperature and humidity data, wind speed levels, or rainfall intensity. In the present invention, the detection device 240 includes, but is not limited to, any one or a combination of a wind speed detection unit, a temperature and humidity detection unit, or a smoke detection unit.

As shown in FIG. 14, the collection device 220 is fixed to the top of the support member 230, and the collection device 220 acquires the satellite observation data of the base station. Typically, the satellite observation data is the position information sent by the satellite system 300. In the present invention, the collection device 220 may acquire the satellite observation data by using RTK carrier phase differential technology. The support member 230 supports the collection device 220, and the height of the support member 230 is adjustable. In the present invention, the height adjustment of the support member 230 may adopt a stepless adjustment mode or a stepped adjustment mode, which is not limited.

As shown in FIG. 13, the controller 250 is connected to the detection device 240 and the support member 230 and is provided with a processor 251 and a memory 252. The memory 252 stores at least two preset segmented intervals associated with the environmental parameter. The processor 251 compares the first environmental parameter with the at least two preset segmented intervals and outputs corresponding segmented control signals to the support member 230. The segmented control signals are used for adjusting the height of the support member 230, and the segmented control signals have a one-to-one correspondence with the preset segmented intervals. Typically, the segmented control signals may be pulse-width modulation (PWM) signals. The controller 540 determines the duty cycle of the segmented control signal by matching the preset segmented interval with the segmented control signal, thereby achieving the height adjustment of the support member 230.

In the present invention, at least three preset segmented intervals may be preset, each preset segmented interval corresponds to one segmented control signal, the heights of the support member 230 corresponding to the segmented control signals are different, and the actual height of the support member 230 is negatively correlated to the environmental severity (such as rainfall intensity or wind speed levels) corresponding to the preset segmented interval.

For example, the case where the environmental parameter is the wind speed and three preset segmented intervals: a first preset segmented interval, a second preset segmented interval, and a third preset segmented interval are preset is used as an example. When the actual wind speed collected by the detection device 240 is in the first preset segmented interval, the controller 250 outputs a first segmented control signal to control the support member 230 to be at a first height. When the actual wind speed collected by the detection device 240 is in the second preset segmented interval, the controller 250 outputs a second segmented control signal to control the support member 230 to be at a second height. When the actual wind speed collected by the detection device 240 is in the third preset segmented interval, the controller 250 outputs a third segmented control signal to control the support member 230 to be at a third height. If it is defined that the wind speed level of the first preset segmented interval is lower than the wind speed level of the second preset segmented interval and the wind speed level of the second preset segmented interval is lower than the wind speed level of the third preset segmented interval, then the first height is greater than the second height, and the second height is greater than the third height.

Therefore, in the present invention, the support member is provided to hold up the collection device for acquiring the satellite observation data, the height of the support member is adjustable, the weather condition around the base station is collected, and the height of the support member is adjusted according to the weather condition so that the existing problems of losses and positioning deviations caused by the influence of weather factors on the base station can be solved, thereby achieving the technical effect of adapting to the weather environment to ensure positioning accuracy and avoid damages, improving the positioning reliability of the base station, and ensuring the positioning accuracy of the base station.

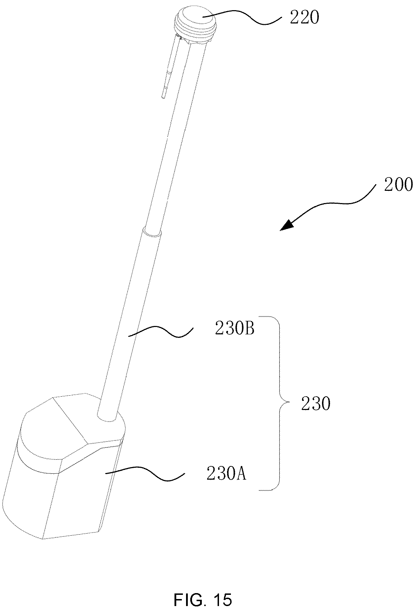

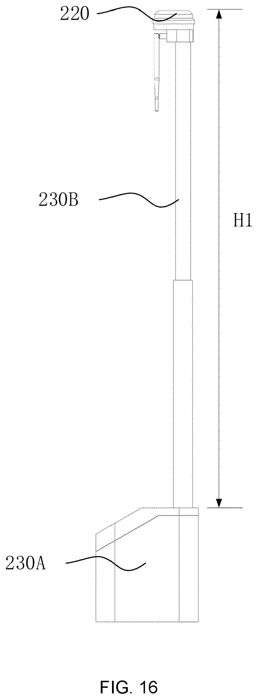

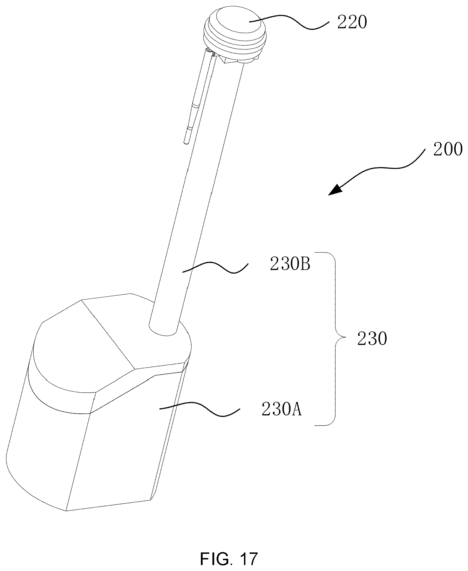

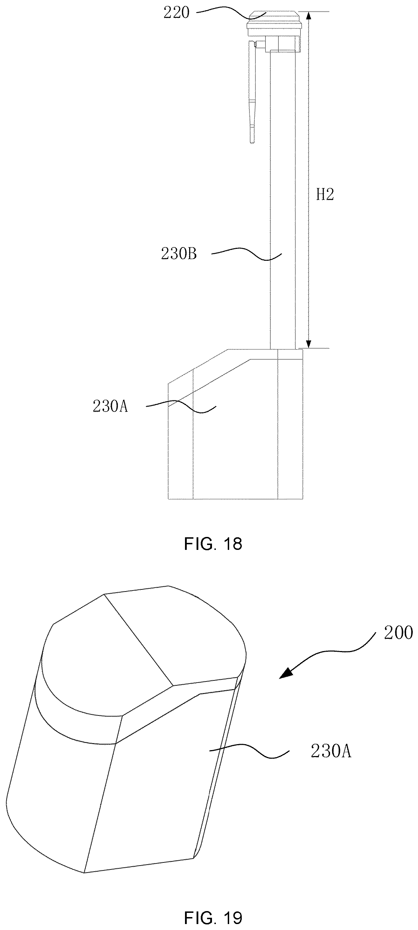

In the present invention, the support member 230 is provided with a height adjustment mechanism, where the height adjustment mechanism receives the segmented control signal outputted by the controller 250 and adjusts the height of the support member 230 based on the segmented control signal. As shown in FIGS. 15 to 20, the height adjustment mechanism is provided with a storage bin 230A and an extension portion 230B, and the extension portion 230B has a storage form and an extended form. In the storage form, the extension portion 230B is at least partially received in the storage bin 230A; and in the extended form, the extension portion 230B has at least one level of extended height. The extended height may be the length of the part of the extension portion 230B extending to the outside of the storage bin 230A.

As shown in FIG. 15 to 20, the case where the environmental parameter is wind speed V is used as an example, and the preset segmented intervals stored in the controller 250 include wind speed V being less than or equal to a first wind speed threshold V1; wind speed V being greater than the first wind speed threshold V1 and wind speed V being less than or equal to a second wind speed threshold V2; wind speed V being greater than the second wind speed threshold V2 and wind speed V being less than or equal to a third wind speed threshold V3; and wind speed V being greater than the third wind speed threshold V3. When the actual wind speed collected by the detection device 240 is less than or equal to the first wind speed threshold V1, the controller 250 controls the extension part 230B to be at the maximum extended height H1. When the actual wind speed collected by the detection device 240 is greater than the first wind speed threshold V1 and less than or equal to the second wind speed threshold V2, the controller 250 controls the extended height of the extension portion 230B to decrease to H2. When the actual wind speed collected by the detection device 240 is greater than the second wind speed threshold V2 and is less than or equal to the third wind speed threshold V3, the controller 250 controls the extended height of the extension portion 230B to decrease to a height less than H2. When the actual wind speed collected by the detection device 240 is greater than the third wind speed threshold V3, the controller 250 controls the extension portion 230B to be completely received in the storage bin 230A so that the height of the base station 200 decreases to the minimum extended height H3 (for example, zero), and in this case, the actual height of the base station 200 is equal to the ground height. By setting a multi-level height adjustment mode, the height of the base station can be adapted to different weather conditions so that the losses and positioning deviations caused by the influence of weather factors on the base station can be avoided, thereby improving the positioning reliability of the base station.

It is to be noted that the critical threshold of each preset segment interval is adjusted according to actual requirements and is not specifically limited.

As shown in FIGS. 15 to 20, the storage bin 230A is provided with a waterproof cover, and the storage bin 230A is configured to control the waterproof cover to close when the extension portion works in the storage form. The waterproof performance of the base station can be improved by providing the waterproof cover.

As shown in FIGS. 15 to 20, the height adjustment mechanism is configured to adjust the extended height of the extension portion 230B in the extended form in a stepped adjustment mode or a stepless adjustment mode. In the stepped adjustment mode, the adjustment of the extended height is achieved by adjusting the duty cycle of the segmented control signal; and in the stepless adjustment mode, the adjustment of the extended height is achieved by changing the magnitude of the drive current or drive voltage of the extension portion 230B. By configuring different height adjustment manners to match different adjustment accuracies, the user experience can be improved.

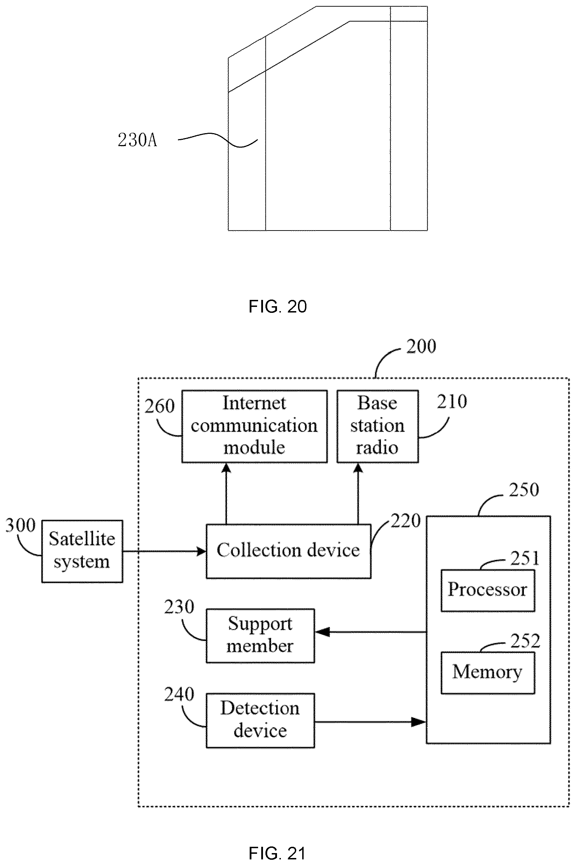

As shown in FIG. 21, the base station 200 further includes an Internet communication module 260, where the Internet communication module 260 establishes a first communication channel between the base station 200 and the network terminal 400, receives a second environmental parameter sent by the network terminal 400, and sends at least one of the following to the network terminal 400: satellite observation data, the first environmental parameter, or segmented control signals. The Internet communication module 260 in the base station 200, the Internet communication module 130 in the self-propelled device 100, and the Internet communication module 830 in the charging pile 800 can be distinguished by reference numerals.

Specifically, the base station 200 may access the Internet 400 and acquire the real-time weather conditions in the work region, that is, the second environmental parameter, such as any one or a combination of temperature and humidity data, wind speed levels, or rainfall intensity, from the network terminal 400 through the Internet communication module 260. The controller 250 determines the preset segmented interval corresponding to the current weather condition according to the first environmental parameter and the second environmental parameter and outputs the segmented control signal according to the matched preset segmented interval.

As shown in FIG. 21, the base station 200 further includes the base station radio 210, where the base station radio 210 establishes a second communication channel between the base station 200 and the self-propelled device 100 and transmits at least one of the satellite observation data, the first environmental parameter, or the second environmental parameter to the self-propelled device based on the second communication channel. In the present invention, the base station radio 210 transmits the satellite observation data and the environmental parameter to at least one self-propelled device 100 in the work region by the unicast or broadcast.

In some examples, the first communication channel and the second communication channel transmit data synchronously, that is, the base station radio 210 and the Internet communication module 260 perform data transmission simultaneously. Specifically, while the base station 200 transmits the satellite observation data and the environmental parameter to the self-propelled device 100 through the base station radio 210, the base station 200 transmits the satellite observation data and the environmental parameter to the network terminal 400 through the Internet communication module 260 and then transmits the satellite observation data and the environmental parameter to the self-propelled device 100 through the network terminal.

In some other examples, the communication priority of the second communication channel is higher than the communication priority of the first communication channel, that is, the communication priority of the base station radio 210 is higher than the communication priority of the Internet communication module 260. Specifically, when the satellite observation data and the environmental parameter cannot be transmitted to the self-propelled device in the work region through the base station radio 210, the satellite observation data and the environmental parameter are transmitted to the network terminal through the Internet communication module 260. By expanding the data transmission manners, traffic consumption is saved, usage costs are saved, and data loss caused by failure of a single communication manner is avoided.

Based on the same concept, the present invention further provides a work system of a self-propelled device. The work system of a self-propelled device includes the self-propelled device and the base station provided in any of the preceding examples, and the self-propelled device is communicatively connected to the base station and is positioned and navigated according to the satellite observation data of the base station.

In the present invention, in the base station, the support member is provided to hold up the collection device for acquiring the satellite observation data, the height of the support member is adjustable, the weather condition around the base station is collected, and the height of the support member is adjusted according to the weather condition so that the existing problems of losses and positioning deviations caused by the influence of weather factors on the base station can be solved, thereby achieving the technical effect of adapting to the weather environment to ensure positioning accuracy and avoid damages, improving the positioning reliability of the base station, and ensuring the positioning accuracy of the base station.

The self-propelled device of the present invention includes the traveling assembly for driving the self-propelled device to travel; the working assembly for implementing the operation function of the self-propelled device; a detection assembly for acquiring the operation data of the self-propelled device; a vehicle-side communication module communicatively connected to the charging pile or the base station provided in any of the preceding examples and used for receiving the charging data and/or differential data sent by the charging pile and sending at least one of the operation data, the charging data, or the differential data to the network terminal; and a vehicle-side positioning module for acquiring vehicle-side positioning data of the self-propelled device and navigating and positioning the self-propelled device according to the vehicle-side positioning data and the differential data.

The detection assembly includes, but is not limited to, at least one of the following: laser radar 181 and a camera module.

In the present invention, the vehicle-side communication module may include at least one of the following: the Internet communication module or the radio station.

In the present invention, the vehicle-side positioning module may be configured to be an RTK mobile station or the like.

In the present invention, the self-propelled device includes any of the following: a self-propelled mower, a self-propelled snow thrower, a self-propelled cleaning device, a self-propelled irrigation device, a small electric vehicle, and an electric robot.

Therefore, the work system of the present invention is connected to the preceding height-adjustable base station so that the problems of losses and positioning deviations caused by the influence of weather factors on communications can be avoided, and the technical effect of adapting to the weather environment to ensure positioning accuracy and avoid damages can be achieved, thereby improving the reliability of the work system and the positioning accuracy of the self-propelled device.

## Claims

1. A self-propelled device (100), comprising:
a housing (110);
a traveling assembly (120) comprising traveling wheels (121) and a traveling electric motor (122), wherein the traveling assembly is coupled to the housing;
a mobile station (140) comprising a satellite receiving antenna (141) and a radio station (142), wherein the satellite receiving antenna is configured to acquire a satellite signal from satellites currently observable by the self-propelled device and included in a satellite system (300), the satellite signal comprises first satellite observation data of the mobile station, the radio station is configured to receive a radio signal from a base station, and the radio signal comprises second satellite observation data of the base station; and
a controller (150) configured to control the self-propelled device to autonomously travel and perform a work task; **characterized by** further comprising:
an Internet communication module (130) configured to be connected to the Internet and download first ephemeris data from the Internet, wherein
the first ephemeris data includes satellite information of all the satellites included in the satellite system, and
the controller is configured to screen out the satellites in the first ephemeris data according to connection vectors between the satellites and the mobile station in conjunction with satellite signal-to-noise ratios in the navigation coordinate system of the self-propelled device at a current observation point of the mobile station thereby obtaining first observable satellites whose satellite elevation angle is greater than a preset elevation angle threshold; and
the controller is configured to obtain second ephemeris data of the mobile station according to the first satellite observation data of the mobile station, compare satellites in the first ephemeris data with satellites in the second ephemeris data, and determine a blocking condition of the mobile station according to satellites that exist in the first ephemeris data but do not exist in the second ephemeris data, and
the controller is configured to re-plan the movement route of the self-propelled device based on the blocking condition of the mobile station.

2. The self-propelled device of claim 1, wherein the controller is configured to calculate coordinates of the mobile station according to at least the first satellite observation data of the mobile station and convert coordinates of the satellites in the first ephemeris data and the coordinates of the mobile station into a navigation coordinate system of the self-propelled device; screen out the satellites in the first ephemeris data according to connection vectors between the satellites and the mobile station in the navigation coordinate system to obtain first observable satellites whose satellite elevation angle is greater than a preset elevation angle threshold; and compare the first observable satellites in the first ephemeris data with second observable satellites in the second ephemeris data to determine blocked satellites that exist in the first ephemeris data but do not exist in the second ephemeris data.

3. The self-propelled device of claim 2, wherein the controller is configured to determine the blocking condition of the mobile station according to at least satellite azimuths and a number of the blocked satellites.

4. The self-propelled device of claim 2, wherein the controller is configured to determine blocking directions of the self-propelled device according to satellite azimuths of the blocked satellites and plan and control a traveling path of the traveling assembly according to the blocking directions.

5. The self-propelled device of claim 1, wherein the controller is further configured to detect a blocking condition of the base station according to the second satellite observation data of the base station and the first ephemeris data.

6. The self-propelled device of claim 5, wherein the base station comprises a collection device (220) for acquiring the second satellite observation data of the base station; a support member (230) for supporting the collection device, wherein a height of the support member is adjustable; a detection device for acquiring a first environmental parameter around the base station; and a controller (250) connected to the detection device and the support member and used for storing preset segmented intervals of the first environmental parameter and outputting segmented control signals to the support member, wherein the segmented control signals are used for adjusting the height of the support member.

7. The self-propelled device of claim 5, wherein the controller is configured to obtain third ephemeris data of the base station according to the second satellite observation data of the base station, compare satellites in the first ephemeris data with satellites in the third ephemeris data, and determine the blocking condition of the base station according to satellites that exist in the first ephemeris data but do not exist in the third ephemeris data.

8. The self-propelled device of any one of claims 1 to 7, wherein the controller is further configured to transmit the blocking condition of the mobile station or the blocking condition of the base station to an external device through the Internet communication module.

9. The self-propelled device of any one of claims 1 to 7, further comprising an alarm device (160) configured to issue an alarm prompt in a case where the blocking condition of the mobile station or the blocking condition of the base station is serious.

## Patentansprüche

1. Eine selbstfahrende Vorrichtung (100), umfassend:
ein Gehäuse (110);
eine Fahranordnung (120), die Laufräder (121) und einen Fahrelektromotor (122) umfasst, wobei die Fahranordnung mit dem Gehäuse gekoppelt ist;
eine Mobilstation (140), die eine Satellitenempfangsantenne (141) und eine Funkstation (142) umfasst, wobei die Satellitenempfangsantenne eingerichtet ist, ein Satellitensignal von Satelliten zu erfassen, die derzeit durch die selbstfahrende Vorrichtung beobachtbar und in einem Satellitensystem (300) enthalten sind, das Satellitensignal erste Satellitenbeobachtungsdaten der Mobilstation umfasst, die Funkstation eingerichtet ist, ein Funksignal von einer Basisstation zu empfangen, und das Funksignal zweite Satellitenbeobachtungsdaten der Basisstation umfasst; und
eine Steuereinrichtung (150), die eingerichtet ist, die selbstfahrende Vorrichtung so zu steuern, dass sie autonom fährt und eine Arbeitsaufgabe ausführt; **dadurch gekennzeichnet, dass** die selbstfahrende Vorrichtung ferner umfasst:
ein Internetkommunikationsmodul (130), das eingerichtet ist, mit dem Internet verbunden zu werden und erste Ephemeridendaten aus dem Internet herunterzuladen, wobei
die ersten Ephemeridendaten Satelliteninformationen aller in dem Satellitensystem enthaltenen Satelliten enthalten, und
die Steuereinrichtung eingerichtet ist, die Satelliten in den ersten Ephemeridendaten gemäß Verbindungsvektoren zwischen den Satelliten und der Mobilstation in Verbindung mit Satellitensignal-Rausch-Verhältnissen in dem Navigationskoordinatensystem der selbstfahrenden Vorrichtung an einem aktuellen Beobachtungspunkt der Mobilstation herauszufiltern, wodurch erste beobachtbare Satelliten erhalten werden, deren Satellitenhöhenwinkel größer als ein voreingestellter Höhenwinkelschwellenwert sind; und
die Steuereinrichtung eingerichtet ist, zweite Ephemeridendaten der Mobilstation gemäß den ersten Satellitenbeobachtungsdaten der Mobilstation zu erhalten, Satelliten in den ersten Ephemeridendaten mit Satelliten in den zweiten Ephemeridendaten zu vergleichen und einen Blockierungszustand der Mobilstation gemäß Satelliten zu bestimmen, die in den ersten Ephemeridendaten vorhanden sind, aber in den zweiten Ephemeridendaten nicht vorhanden sind, und
die Steuereinrichtung eingerichtet ist, die Bewegungsroute der selbstfahrenden Vorrichtung auf der Grundlage des Blockierungszustands der Mobilstation neu zu planen.

2. Die selbstfahrende Vorrichtung nach Anspruch 1, wobei die Steuereinrichtung eingerichtet ist, Koordinaten der Mobilstation zumindest gemäß den ersten Satellitenbeobachtungsdaten der Mobilstation zu berechnen und Koordinaten der Satelliten in den ersten Ephemeridendaten und die Koordinaten der Mobilstation in ein Navigationskoordinatensystem der selbstfahrenden Vorrichtung umzuwandeln; die Satelliten in den ersten Ephemeridendaten gemäß Verbindungsvektoren zwischen den Satelliten und der Mobilstation in dem Navigationskoordinatensystem herauszufiltern, um erste beobachtbare Satelliten zu erhalten, deren Satellitenhöhenwinkel größer als ein voreingestellter Höhenwinkelschwellenwert sind; und die ersten beobachtbaren Satelliten in den ersten Ephemeridendaten mit zweiten beobachtbaren Satelliten in den zweiten Ephemeridendaten zu vergleichen, um blockierte Satelliten zu bestimmen, die in den ersten Ephemeridendaten vorhanden sind, aber in den zweiten Ephemeridendaten nicht vorhanden sind.

3. Die selbstfahrende Vorrichtung nach Anspruch 2, wobei die Steuereinrichtung eingerichtet ist, den Blockierungszustand der Mobilstation zumindest gemäß Satellitenazimuten und einer Anzahl der blockierten Satelliten zu bestimmen.

4. Die selbstfahrende Vorrichtung nach Anspruch 2, wobei die Steuereinrichtung eingerichtet ist, Blockierungsrichtungen der selbstfahrenden Vorrichtung gemäß Satellitenazimuten der blockierten Satelliten zu bestimmen und einen Fahrweg der Fahranordnung gemäß den Blockierungsrichtungen zu planen und zu steuern.

5. Die selbstfahrende Vorrichtung nach Anspruch 1, wobei die Steuereinrichtung ferner eingerichtet ist, einen Blockierungszustand der Basisstation gemäß den zweiten Satellitenbeobachtungsdaten der Basisstation und den ersten Ephemeridendaten zu detektieren.

6. Die selbstfahrende Vorrichtung nach Anspruch 5, wobei die Basisstation eine Erfassungsvorrichtung (220) zum Erfassen der zweiten Satellitenbeobachtungsdaten der Basisstation; ein Stützelement (230) zum Stützen der Erfassungsvorrichtung, wobei eine Höhe des Stützelements einstellbar ist; eine Detektionsvorrichtung zum Erfassen eines ersten Umgebungsparameters um die Basisstation herum; und eine Steuereinrichtung (250) umfasst, die mit der Detektionsvorrichtung und dem Stützelement verbunden ist und zum Speichern voreingestellter segmentierter Intervalle des ersten Umgebungsparameters und zum Ausgeben segmentierter Steuersignale an das Stützelement verwendet wird, wobei die segmentierten Steuersignale zum Einstellen der Höhe des Stützelements verwendet werden.

7. Die selbstfahrende Vorrichtung nach Anspruch 5, wobei die Steuereinrichtung eingerichtet ist, dritte Ephemeridendaten der Basisstation gemäß den zweiten Satellitenbeobachtungsdaten der Basisstation zu erhalten, Satelliten in den ersten Ephemeridendaten mit Satelliten in den dritten Ephemeridendaten zu vergleichen und den Blockierungszustand der Basisstation gemäß Satelliten zu bestimmen, die in den ersten Ephemeridendaten vorhanden sind, aber in den dritten Ephemeridendaten nicht vorhanden sind.

8. Die selbstfahrende Vorrichtung nach einem der Ansprüche 1 bis 7, wobei die Steuereinrichtung ferner eingerichtet ist, den Blockierungszustand der Mobilstation oder den Blockierungszustand der Basisstation über das Internetkommunikationsmodul an eine externe Vorrichtung zu übertragen.

9. Die selbstfahrende Vorrichtung nach einem der Ansprüche 1 bis 7, ferner umfassend eine Alarmvorrichtung (160), die eingerichtet ist, einen Alarmhinweis auszugeben, falls der Blockierungszustand der Mobilstation oder der Blockierungszustand der Basisstation schwerwiegend ist.

## Revendications

1. Un dispositif automoteur (100), comprenant :
un boîtier (110) ;
un ensemble de déplacement (120) comprenant des roues de déplacement (121) et un moteur électrique de déplacement (122), dans lequel l'ensemble de déplacement est couplé au boîtier ;
une station mobile (140) comprenant une antenne de réception satellite (141) et une station radio (142), dans laquelle l'antenne de réception satellite est configurée pour acquérir un signal satellitaire provenant de satellites actuellement observables par le dispositif automoteur et inclus dans un système satellitaire (300), le signal satellitaire comprend de premières données d'observation satellitaire de la station mobile, la station radio est configurée pour recevoir un signal radio provenant d'une station de base, et le signal radio comprend de deuxièmes données d'observation satellitaire de la station de base ; et
une commande (150) configurée pour commander le dispositif automoteur afin qu'il se déplace de manière autonome et exécute une tâche de travail ; **caractérisé en ce que** le dispositif automoteur comprend en outre :
un module de communication Internet (130) configuré pour être connecté à Internet et télécharger de premières données d'éphémérides depuis Internet, dans lequel
les premières données d'éphémérides comprennent des informations satellitaires de tous les satellites inclus dans le système satellitaire, et
la commande est configurée pour filtrer les satellites dans les premières données d'éphémérides selon des vecteurs de liaison entre les satellites et la station mobile conjointement avec des rapports signal sur bruit satellitaires dans le système de coordonnées de navigation du dispositif automoteur à un point d'observation actuel de la station mobile, obtenant ainsi de premiers satellites observables dont les angles d'élévation satellitaire sont supérieurs à un seuil d'angle d'élévation prédéfini ; et
la commande est configurée pour obtenir de deuxièmes données d'éphémérides de la station mobile selon les premières données d'observation satellitaire de la station mobile, comparer les satellites dans les premières données d'éphémérides aux satellites dans les deuxièmes données d'éphémérides, et déterminer une condition de blocage de la station mobile selon les satellites qui existent dans les premières données d'éphémérides mais n'existent pas dans les deuxièmes données d'éphémérides, et
la commande est configurée pour replanifier l'itinéraire de déplacement du dispositif automoteur sur la base de la condition de blocage de la station mobile.

2. Le dispositif automoteur selon la revendication 1, dans lequel la commande est configurée pour calculer les coordonnées de la station mobile selon au moins les premières données d'observation satellitaire de la station mobile et convertir les coordonnées des satellites dans les premières données d'éphémérides et les coordonnées de la station mobile en un système de coordonnées de navigation du dispositif automoteur ; filtrer les satellites dans les premières données d'éphémérides selon des vecteurs de liaison entre les satellites et la station mobile dans le système de coordonnées de navigation afin d'obtenir de premiers satellites observables dont les angles d'élévation satellitaire sont supérieurs à un seuil d'angle d'élévation prédéfini ; et comparer les premiers satellites observables dans les premières données d'éphémérides à de deuxièmes satellites observables dans les deuxièmes données d'éphémérides afin de déterminer des satellites bloqués qui existent dans les premières données d'éphémérides mais n'existent pas dans les deuxièmes données d'éphémérides.

3. Le dispositif automoteur selon la revendication 2, dans lequel la commande est configurée pour déterminer la condition de blocage de la station mobile selon au moins les azimuts satellitaires et le nombre de satellites bloqués.

4. Le dispositif automoteur selon la revendication 2, dans lequel la commande est configurée pour déterminer des directions de blocage du dispositif automoteur selon les azimuts satellitaires des satellites bloqués et planifier et commander un trajet de déplacement de l'ensemble de déplacement selon les directions de blocage.

5. Le dispositif automoteur selon la revendication 1, dans lequel la commande est en outre configurée pour détecter une condition de blocage de la station de base selon les deuxièmes données d'observation satellitaire de la station de base et les premières données d'éphémérides.

6. Le dispositif automoteur selon la revendication 5, dans lequel la station de base comprend un dispositif de collecte (220) destiné à acquérir les deuxièmes données d'observation satellitaire de la station de base ; un élément de support (230) destiné à supporter le dispositif de collecte, dans lequel une hauteur de l'élément de support est réglable ; un dispositif de détection destiné à acquérir un premier paramètre environnemental autour de la station de base ; et une commande (250) connectée au dispositif de détection et à l'élément de support et utilisée pour stocker des intervalles segmentés prédéfinis du premier paramètre environnemental et délivrer des signaux de commande segmentés à l'élément de support, dans lequel les signaux de commande segmentés sont utilisés pour régler la hauteur de l'élément de support.

7. Le dispositif automoteur selon la revendication 5, dans lequel la commande est configurée pour obtenir de troisièmes données d'éphémérides de la station de base selon les deuxièmes données d'observation satellitaire de la station de base, comparer les satellites dans les premières données d'éphémérides aux satellites dans les troisièmes données d'éphémérides, et déterminer la condition de blocage de la station de base selon les satellites qui existent dans les premières données d'éphémérides mais n'existent pas dans les troisièmes données d'éphémérides.

8. Le dispositif automoteur selon l'une quelconque des revendications 1 à 7, dans lequel la commande est en outre configurée pour transmettre la condition de blocage de la station mobile ou la condition de blocage de la station de base à un dispositif externe par l'intermédiaire du module de communication Internet.

9. Le dispositif automoteur selon l'une quelconque des revendications 1 à 7, comprenant en outre un dispositif d'alarme (160) configuré pour émettre une indication d'alarme lorsque la condition de blocage de la station mobile ou la condition de blocage de la station de base est grave.
